# EUROPEAN PATENT SPECIFICATION

(11) **EP 4 638 257 B1**
(45) Date of publication and mention of the grant of the patent: **26.08.2026**
(21) Application number: 23837607.3
(22) Date of filing: 20.12.2023
(51) Int. Cl.: B63B 21/00, G01L 5/04, G01M 5/00

(54) **MONITORING THE CONDITION OF MARINE CHAINS**
ÜBERWACHUNG DES ZUSTANDS VON MEERESKETTEN
SURVEILLANCE DE L'ÉTAT DE CHAÎNES MARINES

(30) Priority: 20.12.2022 GB 202219285
(43) Date of publication of application: 29.10.2025
(73) Proprietor: 4Subsea AS, 1383 Asker (NO)
(72) Inventor: GRØNNINGSÆTER, Åge, 4630 Kristiansand (NO); JENKINS, Peter Erik, 1394 Nesbru (NO)
(74) Representative: Keltie LLP
(86) International application number: PCT/EP2023/087118
(87) International publication number: WO 2024/133571

(56) References cited:
- DE-A1- 102019 103 313
- GB-A- 2 415 256
- US-A- 3 810 081
- US-A1- 2022 003 636

## Description

This invention relates to monitoring the condition of mooring chains that serve as mooring lines or form sections of mooring lines.

Among other applications, mooring chains are used to anchor floating offshore installations in the subsea oil and gas industry and in the offshore renewable energy industry. Specific examples of offshore energy equipment anchored by chains include floating production, storage and offloading vessels (FPSOs), floating platforms, floating offshore wind turbines (FOWTs) and wave-energy converters (WECs).

As a mooring chain bends along its length under tension during its operational life, successive articulated links of the chain pivot and slide relative to each other. The chain is therefore prone to wear where there is repetitive rubbing contact between the successive links, which may be exacerbated by the effects of corrosion. Over time, the load-bearing capacity of the chain diminishes with degradation and thinning of the links until, eventually, the chain could fail.

Whilst floating offshore installations employ multiple mooring chains for redundancy, failure of a mooring chain is unacceptable because it would reduce the margin of safety and increase stress on the mooring chains that survive. If the degree of wear could be monitored effectively, preventative replacement of a worn mooring chain could be performed before failure occurs.

The phenomenon of chain degradation is well known and typical chain wear rates are well understood in the art. For example, there is a thorough discussion of chain degradation in Research Report No. RR1098 published by UK's Health and Safety Executive entitled *Degradation of mooring chains of floating offshore installations: chain measurement, estimation of wear, corrosion rates, and their effect on break load* (available at https://www.hse.gov.uk/research/rrpdf/rr1098.pdt).

Actual chain wear rates can be greater or lesser than predicted as they depend on variables such as tolerances, material quality and the position of links along a chain. Thus, wear may not be uniform along the length of a chain, with the result that some of the links could be closer to failure than others, or closer to failure than predicted.

Conventionally, mitigating the risk of premature failure of a mooring chain involves over-engineering the links; however, this adds cost and especially weight to the chain. Long chains for use in deeper water and large chains for mooring huge floating facilities could suffer from reduced capacity due to tension arising from self-weight and could become too heavy to handle.

Where the size of mooring chain links has to be limited to save weight, it is common to inspect the links periodically or to monitor them intermittently or continuously.

In a holistic approach to chain monitoring, the overall geometry of a chain may be checked as a whole. For example, US 10780954 teaches recording an image of a chain whereas WO 2020/164760 teaches attaching a fibre optic to a chain to monitor its geometry and articulations. More generally, holistic chain monitoring can be performed continuously, for example by mounting acoustic transducers on critical links, or intermittently, as in the RAMS system offered by Tritech International Limited (trade marks acknowledged). In the RAMS system, the integrity of mooring lines is monitored from a sonar head deployed beneath a moored vessel, without additional sensors on the lines. However the holistic approach cannot detect potential failure of individual links of a chain.

Inspection of chain links generally relies upon visual inspection, measurement by callipers or non-destructive testing, for example by ultrasound to detect cracks as disclosed in EP 2507583 or WO 2015/030600. Optical measurement or 3D photogrammetry may also be used to measure critical chain dimensions. However, non-destructive testing and measurement of individual links is difficult, time-consuming and expensive, especially when performed offshore and underwater.

Monitoring of chain links may rely upon continuous mechanical measurement of deformation of a link, typically by using a strain gauge or by measuring load using a load cell as exemplified in US 10078025. Deviations in dimensions or stress can indicate abnormal wear or fatigue. Similarly, in US 2013/279298, strain gauges are embedded into a shroud connected to the chain links and signals representing strain are transmitted acoustically.

Retrofitting a chain with a sensor clamp is also known in the art, for example as described in CN 104330102, CN 109029527 and CN 110081921. Again, the sensors proposed in those documents are strain gauges. However, in view of the large dimensions of chain links used to moor offshore energy equipment such as FPSOs, FOWTs or WECs, especially in deep water, the standard approach of monitoring mooring chains with strain gauges is limited.

GB 2415256 describes another approach to chain monitoring, namely exciting a chain link by, for example, hammering the link to propagate a signal through the link and then receiving and processing the signal to determine the structural integrity of the link.

US 2022/0003636 and WO 2009/044117 describe the monitoring of chains that are used in power transmission and motion control, for example in lifting or conveying applications.

US 3810081 describes a method and apparatus for measuring the angle of inclination of an anchor chain of a floating vessel in determining the load on the chain. DE 10 2019103313 describes an anchor chain monitoring system and method.

It is against this background that the invention has been devised. The invention is defined by the appended claims.

In one sense, the invention resides in a system for monitoring the condition of a mooring chain as defined in claim 1.

The emitter and the receiver may both be on the first link of the chain, in which case an acoustic transducer could serve as the emitter and as the receiver. The emitter and the receiver can each be opposed to an intermediate reflecting surface on a second link of the chain. The reflecting surface could be defined by a reflector that is fixed to the second link of the chain.

The emitter may be configured to emit the signal toward an opposed reflecting outer end surface of the second link of the chain, that surface of the second link being disposed within an inner opening of the first link. Alternatively, the signal can be emitted toward an opposed reflecting outer end surface of the second link of the chain, that surface of the second link being disposed within an inner opening of an intermediate link that couples the first link to the second link. In that case, the emitter could also be disposed within the inner opening of the intermediate link.

Conveniently, the emitter and the receiver can be implemented together in a sensor unit that is attached or attachable to the first link of the chain. For example, the sensor unit could span the inner opening of the first link from one longitudinally-extending side to another.

In a direct transmission approach, the receiver could be in fixed relation to a second link of the chain. Nevertheless, a receiver on the second link could still be disposed within an inner opening of the first link or within an inner opening of an intermediate link that couples the first link to the second link. In the latter case, the emitter can also be disposed within the inner opening of the intermediate link. A processor may be in data communication with the emitter and the receiver via a wired or wireless connection that extends between the first and second links.

The emitter is suitably attached or attachable to the first link at a central longitudinal position along the first link. For example, the emitter could be attached or attachable to at least one longitudinally-extending side of the first link. The emitter could instead be disposed on an outer end surface of the first link.

The emitter can be aligned with a central longitudinal axis of the first link, in which case the emitter can be oriented to emit the signal in a direction substantially parallel to the central longitudinal axis of the first link. More generally, the emitter could be disposed within an inner opening of the first link. It is also possible for the emitter to be offset laterally from a plane of the first link. In that case, the emitter may be oriented to emit the signal in a direction converging with the central longitudinal axis of the first link.

First and second emitters may be in mutually-opposed orientation. For example, the first and second emitters can be in fixed relation to the first link being an intermediate link disposed between and conjoining a pair of outer links each with a reflecting outer end surface that is opposed to a respective one of the emitters and is disposed within an inner opening of the first link.

At least the first link may be a stud link that comprises a stud dividing an inner opening. In that case, the or each emitter can conveniently be mounted on the stud. Where there are first and second emitters, they could be disposed on respective mutually-opposed sides of the stud.

The system may further comprise a processor that is configured to determine time of flight of the signal from the emitter to the receiver. The processor may thereby generate distance data, which can be stored in a data store and/or conveyed by a communication module to a monitoring or relay station.

The or each emitter may, for example, be configured to emit the signal as a beam with a beam angle of up to 45°, or with a pulse frequency of 0.1 to 5 MHz.

The system may comprise a reference reflector which is configured to reflect at least a portion of the signal, emitted by the emitter, to the receiver as a reference signal for use by the processor in calibration of the determined distance. In other words, the reference reflector may be located along a beam path of the signal emitted by the emitter, and specifically be located between the emitter and the receiver. The reference reflector may take the form of a thin length of wire, or a disk.

Additionally or alternatively, the system may comprise a reference emitter (in addition to the emitter that emits the signal used to measure the distance to the chain link). In this case, and where a reference reflector is also incorporated, the reference emitter may be configured to emit an auxiliary acoustic signal (to the receiver) and the reference reflector may be configured to reflect at least a portion of the auxiliary signal as a reference signal for use by the processor in calibration of the determined distance. In this instance, the reference reflector is located at an angle to the beam path of the signal emitted by the emitter. The reference reflector in this case may take the form of a plate. Instead of a reference reflector, a reference receiver may be incorporated which is configured to receive the auxiliary signal (emitted by the reference emitter) as a reference signal for use by the processor in calibration of the determined distance.

The processor may be configured to: measure a reference time lapse that occurs prior to receiving the reference signal; and determine a reference velocity of sound in water using the reference time lapse. For example, based on the determined reference time lapse and a distance travelled by the reference signal; this distance travelled would typically correspond to a known distance to the reference reflector or the reference receiver. Additionally, the processor may be configured to calibrate the determined distance between the emitter and a link of the chain other than the first link using the reference velocity of sound in water.

In this way, the processor is able to take into account any variations in the velocity of sound in water, resulting from changes in temperature, salinity and/or depth of the water around the chain being monitored. The processor can calibrate the distance measurement to the chain link(s) by using the velocity of sound in water that is appropriate for the surrounding conditions. A more accurate distance measurement can hence be obtained.

The system may comprise a sensor unit having first and second sensor modules in operative communication with one another. The emitter and the receiver may be housed together in the first sensor module, and the processor may be housed in the second sensor module. This configuration provides for flexibility in the scenarios in which the sensor unit can be implemented. For example, the first sensor module may be sized and configured to be inserted into or is insertable into an inner opening of a link of the chain, allowing the emitter and receiver to measure distances between chain links on smaller scales as the remaining electronic components of the sensor unit (in the second sensor module) can be separated and located adjacent to the chain.

Where a reference emitter is implemented, this may also be housed in the first sensor module. In some cases, the reference reflector (where appropriate) may also be housed in the first sensor module. Additionally or alternatively, the reference reflector may be connected to the first sensor module; and may in some cases correspond to a portion of the housing of the second sensor module.

The inventive concept embraces a corresponding method for monitoring the condition of a chain as defined in claim 18.

The signal may be reflected to the receiving location from a second link of the chain, either from a location within an inner opening of the first link or from a location within an inner opening of an intermediate link that couples the first link to the second link. The signal can be emitted from within the inner opening of the intermediate link.

The receiving location could be fixed relative to a second link of the chain but still within an inner opening of the first link or within an inner opening of an intermediate link coupling the first link to the second link. The signal can also be emitted within the inner opening of the intermediate link in that case.

The signal can be emitted along a central longitudinal axis of the first link, in a direction converging with the central longitudinal axis of the first link, from within an inner opening of the first link, or from an outer end surface of the first link. It is also possible to emit signals in mutually-opposed directions from first and second emission locations that are fixed relative to the first link. In that case, the respective signals could be emitted at different times, with different phases or with different frequencies.

Data representative of said distance may be generated at a link and communicated from that link to a receiving station remote from that link. For example, the distance data could be relayed along the chain to the receiving station or conveyed to the receiving station via an underwater vehicle stationed beside that link.

At least a portion of the (main) signal emitted by the emitter can be reflected to the receiver as a reference signal for use by the processor in calibration of the determined distance.

Additionally or alternatively, an auxiliary signal may be emitted, and at least a portion of the auxiliary signal can be reflected to the receiver as a reference signal for use by the processor in calibration of the determined distance. Alternatively, at least a portion of the auxiliary signal can be received as a reference signal (by a reference receiver, for example) for use by the processor in calibration of the determined distance.

A reference time lapse between emitting the main / auxiliary signal, and prior to receiving the reference signal can be measured; and a reference velocity of sound in water can be determined using the reference time lapse. For example, based on the determined reference time lapse and a distance travelled by the reference signal; this distance travelled would typically correspond to a known distance to the reference reflector or the reference receiver. The determined distance between the emitter and a link of the chain other than the first link can then be calibrated using the reference velocity of sound in water.

In summary, the invention contemplates a technique for detecting chain wear by measuring time of flight of an acoustic signal transmitted between chain links, for example using a pulse-echo ultrasound technique. Over a period of months or years, corrosion and frictional movement between successive links will cause metal at the interfaces between those links to disappear. Consequently, the longitudinal distance between opposed links, represented by time of flight of the signal, will increase over time and that increasing distance can infer the effects of degradation of the links.

In some embodiments, one or more sensor units of the invention periodically measure and store the longitudinal distance between opposed, adjacent links that are joined to each other via an intermediate link. As the nominal distance between opposed links of a new chain is known, it is possible to estimate the level of wear even if a sensor unit of the invention is mounted on a chain late in the working life of the chain.

A sensor unit of the invention can store distance measurements in its internal memory periodically, for example when taking measurements at regular intervals. A time series or a statistical summary of the measured distance over time could be made available to service personnel via a wireless modem or other data communication device. For example, an acoustic modem could be coupled to the sensor to transmit data and a counterpart modem could be located in a vessel, on a rig or in a buoy to receive data. In another approach, a modem such as an optical modem could be carried by an underwater vehicle such as an ROV that travels past the sensor to download stored data from time to time.

A sensor unit of the invention may comprise a transceiver comprising a transmitter such as a piezoelectric transducer, a receiver and a processing unit. In pulse-echo embodiments, an ultrasound acoustic pulse is emitted from the transducer toward an opposed link of a chain and an echo reflected from the chain is detected by the receiver. The received signal may be processed, for example by a rectifier and lowpass filter, i.e. an envelope detector, followed by a comparator of the processing unit. The time of flight from the transducer and back to the receiver is used to determine the distance between the sensor and the link. The sensor is thereby used to estimate, by indirect measurement, how much metal has been eroded from the contact interface between successive links, behind the link that is subject to pulse-echo measurement.

Two miniature pulse-echo systems of this design could be attached to an intermediate link of a chain to measure the distances to the two opposed links that are joined by the intermediate link. Those pulse-echo systems could be integrated into a single combined unit attached to a link or could be embodied in respective individual units that may be attached to the same link.

Chain wear sensor units of the invention could, for example, be used in conjunction with clamps that attach corrosion-protecting anodes to links of a mooring chain. Several links of a mooring chain could be equipped with such clamps. A sensor unit of the invention could be attached to such a clamp in addition to an anode or could be provided on a separate clamp.

Design criteria for a pulse-echo ultrasound system include beam profile and pulse length. Beam profile depends on the shape, size and curvature of the transducer as well as excitation frequency and determines the extent to which the beam flares beyond the diameter of the transducer face with increasing distance from that face.

In the context of the invention, the ultrasound beam should be wide enough to impinge on an opposed link even if the ultrasonic transducer is not aimed perfectly toward the double-curved surface of that link. In other words, the beam width should be sufficient to ensure reasonable robustness of alignment. However, the beam should not be so wide that it could generate 'false echoes', for example by impinging on the intermediate link on which the sensor is mounted.

In pulse-echo embodiments of the present invention, the ultrasound pulse is used principally to detect the presence of the steel structure of an opposed link and to measure time of flight back and forth to estimate the distance between the sensor and the closest point on the double-curved facing surface of the link. In that context, pulse length and shape may be important, depending on the selected method for detecting the presence of, and time of arrival of the reflected pulse. For example, the received pulse may be envelope-detected and a comparator may be used to determine time of arrival of that pulse. In that case, however, phase information in the reflected pulse is lost. A steep leading edge of the outgoing pulse may be beneficial for a precise measurement.

In other approaches, the received RF pulse may be digitized by a fast AD-converter, and the shape of the pulse can be cross-correlated with a fixed reference pulse stored in the processing unit. This method could provide a more robust and accurate time estimate because the phase information in the reflected pulse is maintained. Alternatively, the received signal may be quadrature-demodulated to the base band and digitized by an AD-converter that does not need to be as fast as in the preceding approach. Amplitude and phase information are maintained, and the processing unit can use this information to determine the time of arrival with high time resolution.

It is envisaged that the present invention can be realised with a broad range of operating parameters. For example, the diameter or the rectangular dimension of the radiator face of the transducer can typically range from a few millimetres to a few centimetres. Transducer frequency could range from a few hundred kilohertz to several megahertz and the beam profile or opening angle could range from a few degrees to, for example, forty-five degrees.

There will inevitably be trade-offs between these and other parameters and performance such as detection reliability, robustness to mounting, accuracy in distance estimation and so on. For example, a high ultrasound frequency will generally increase the ability to measure distance with high resolution, but the beam opening angle may become impractically narrow. However, solutions to widen the beam can be considered such as curving the transducer surface and/or applying an acoustical lens. Providing an array of multiple transducers is also possible.

Whilst some chains have open links and so are referred to as studless or coil chains, many mooring lines employ studded or stud-link chains in which a transverse bar or stud extends across the central opening of each link. The presence of the stud may require an ultrasound sensor of the invention to be modified. For example, a pair of ultrasonic transducers could be separated and placed one on each side of the stud.

Alternatively, the transducers could be located in a single unit, but offset from a central longitudinal plane of an intermediate link and angled toward the opposed faces of the links that are joined by the intermediate link .

In some embodiments of the invention, a monitoring device for measuring wear of a mooring chain may comprise a mount positioned on a first link or a second link that are connected to each other by an interconnecting link, or positioned on the interconnecting link itself. At least one acoustic transducer may be oriented to send an acoustic signal generally longitudinally toward the first or second link. The transducer, or another receiver, receives the signal directly or after reflection. A data logger records the distance between the transducer and the first or second chain link evaluated from the time of arrival of the received signal.

The data logger may comprise storage for data. The data logger may comprise or be interfaced with a signal transmission system, for example for transmitting a signal acoustically, wirelessly, electrically along a wire or a cable, or optically along a fibre optic.

The mount may be permanently attached to or integrated with a link or may be attachable to a link, for example as a clamp.

The mount may be attached to one or both sides of the interconnecting link, for example at a position approximately central with respect to a side of the interconnecting link. If the interconnecting link is a stud link, the mount could be attached to the central bar or stud of the interconnecting link.

The monitoring device may comprise two, or first and second, acoustic transducers oriented longitudinally in mutually-opposed directions, the first acoustic transducer facing toward the first link and the second acoustic transducer facing toward the second link.

The signals emitted by the transducers may be emitted simultaneously or with a delay between them or with different phases, and/or with the same frequency and/or with different frequencies. The data logger may comprise a filtering system to eliminate interference between the reflected signals of the different transducers.

Thus, the condition of a chain is monitored in accordance with the invention by fixing at least one acoustic transducer to a first link of the chain. The transducer emits an acoustic signal toward a receiver on any link of the chain. For example, the receiver could be on the first link to receive the signal after reflection from a second link, which could be interconnected with the first link or could be opposed to the first link across an intermediate link. Alternatively, in a direct transmission system, the receiver could be on the second link or on another link.

By measuring time of flight of the signal from the transducer to the receiver, the distance between the transducer and a link of the chain other than the first link is determined. An increase in that distance indicates a degree of wear at one or more contact interfaces between successive links of the chain.

There is also described a system for measuring a distance property of a marine element. The system comprises at least one emitter positioned in a fixed relation to the marine element and configured to emit a (main) signal; at least one receiver configured to receive the signal; a reference reflector positioned in a fixed relation to the at least one emitter and configured to reflect at least a portion of the signal to the at least one receiver as a reference signal; and a processor configured to use the reference signal to perform a calibration or compensation in relation to the distance property. The processor may also be configured to use the received signal (or portion thereof that is not reflected by the reference reflector) to measure the distance property.

More particularly, the reference signal (and subsequent calibration) can be used to compensate or account for changes in the environmental conditions surrounding the system which may cause inaccuracies in the measurement of the distance property. For example, changing environmental conditions can affect the velocity of sound in water, which is one of the main parameters that is used to measure distance properties, particularly where the signals are emitted by acoustic transducers, and/or utilise pulse-echo detection.

In some cases, the at least one emitter and the at least one receiver are implemented as an acoustic transducer. In this instance, the reference reflector may reflect a portion of the same (main) signal that is emitted from and subsequently received by the transducer to measure the distance property. The reference reflector in this case may be therefore referred to as a main beam reference reflector. The main beam reference reflector may correspond to any suitable reflector that can reflect a sufficient proportion of the emitted signal to generate a detectable reference signal, whilst allowing a sufficient proportion of the signal to pass unreflected so as to allow an accurate measurement of the distance property. For example, the reference reflector may be implemented as a thin length of wire, or a disk, suspended in the path of the signal emitted by the emitter.

In some cases, the at least one emitter and the at least one receiver are implemented as a plurality of acoustic transducers. In such instances, a first transducer may be configured to emit and receive a first (main) signal to measure the distance property, and a second transducer may be configured to emit a second (auxiliary) signal that is reflected by the reference reflector as the reference signal. Considered another way, one transducer may function primarily as a 'reference' or 'auxiliary' transducer to emit and receive the reference signal, while the rest of the plurality of transducers may be used to emit and receive a 'main' signal that is used to measure the distance property of the marine element. The reference reflector in this case may be referred to as an auxiliary beam reference reflector. As an example, such a reflector may be implemented as a reflecting plate.

Alternatively, it is envisaged that rather than a reference reflector, a reference receiver could be implemented, in combination with a reference emitter. The reference emitter would emit an auxiliary signal that would be received by the reference receiver as the reference signal.

In any of the above arrangements, the processor is configured to: measure a reference time lapse prior to receiving the reference signal; and to determine a reference velocity of sound in water using the reference time lapse. For example, this determination may be based on the reference time lapse and a distance travelled by the reference signal; this distance travelled would typically correspond to a known distance to the reference reflector or reference receiver. The reference velocity of sound in water may then be used when measuring the distance property.

The system may comprise a sensor unit having first and second sensor modules in operative communication with one another. The at least one emitter and the at least one receiver may be housed together in the first sensor module, and the processor may be housed in the second sensor module. This configuration provides for flexibility in the scenarios in which the sensor unit can be implemented. For example, where the marine element is a chain comprising links, the first sensor module may be sized and configured to be inserted into or is insertable into an inner opening of a link of the chain. The emitter and receiver can thus measure distances between chain links on smaller scales as the remaining electronic components of the sensor unit in the second sensor module can be separated and located adjacent to the chain.

In some cases, especially where only a single emitter and receiver are used, the reference reflector may also be housed in the first sensor module. Where a plurality of emitters and receivers are used (corresponding to a plurality of acoustic transducers), they may also be housed in the first sensor module. In such instances, the reference reflector may be housed within the first sensor module, or may instead be connected to the first sensor module. In a specific implementation, the reference reflector may correspond to a portion of the housing of the second sensor module.

The above-described system is very flexible in its practical implementations, and can be used when measuring distance properties for a variety of different marine elements. For example, the marine element may correspond to any one of the following: a flexible elongate subsea element such as a rope, umbilical or chain; a relatively rigid elongate subsea element such as a riser or pipe for hydrocarbon transportation or a structural member of a subsea structure such as a rig; a subsea object such as a subsea wellhead (or sub-components thereof); or a subsea accessory or an item of subsea equipment such as a blowout preventer (BOP).

The marine element is a chain comprising a plurality of links, the distance property that is measured corresponds to a distance between links of the chain to monitor wear of the chain links, and, optionally, to monitor or measure axial bending or load in the chain. The distance property in question may be monitored over time.

In the above instances where an elongate marine element is monitored, the system may further comprise a plurality of supports that are attachable to the element at respective positions spaced along the element. One of the supports carries the at least one emitter and the at least one receiver, and the other one of the supports carries at least one reflector, each reflector corresponding to or paired with one of the emitters. A reference reflector or reference receiver may also be incorporated into such a system - for example in association with the support that carries the at least one emitter and the at least one receiver. Additionally or alternatively, the other one of the supports (that does not carry the at least one emitter and at least one receiver) carries the reference reflector which is offset laterally from the element and is positioned to reflect the reference signal back to the at least one receiver. Similarly, the reference receiver could be located on the other one of the supports.

Where the reference reflector is located on a support different to that on which the at least one emitter and the at least one receiver are located, the reference reflector may surround the element and optionally may be circumferentially continuous (for example, it may take the form of a ring or torus shaped component). Alternatively, the reference reflector may be a spot reflector that is angularly aligned with the at least one emitter. In some instances, a plurality of spot reflectors may be provided: one to serve as a reference reflector, and the rest of the plurality of spot reflectors may be used to measure the distance property.

Where the marine element is a subsea object or subsea accessory such as a subsea wellhead (or components thereof) or a BOP, the distance property that is measured may correspond to a distance between components of a subsea object or between two subsea objects or accessories. In such instances, the at least one emitter may be attachable to one of the objects or components or accessories, whilst the at least one receiver may be attachable to the other object or component or accessory. The reference reflector may be attached or attachable to the at least one emitter or to its corresponding object or component or accessory.

As noted above, the reference signal (and subsequent calibration) can be used to compensate or account for changes in the environmental conditions surrounding the system which may cause inaccuracies in the measurement of the distance property. In particular, changes in the velocity of sound in water resulting from changing environmental conditions.

Optionally, the method may further comprise emitting an auxiliary signal that is reflected by the reference reflector as the reference signal. The auxiliary signal is emitted in addition to the 'main' signal that is emitted for the primary purpose of measuring the distance property. In this instance, the main signal would not be reflected to form the reference signal.

Alternatively, the method may further comprise emitting an auxiliary signal that is received (for example, by a reference receiver) as the reference signal.

In any of the above methods, the method may further comprise: measuring a reference time lapse that occurs prior to receiving the reference signal; and determining a reference velocity of sound in water using the reference time lapse. For example, this determination may be based on the reference time lapse and a distance travelled by the reference signal; this distance travelled would typically correspond to a known distance to the reference reflector or reference receiver. The reference velocity of sound in water may then be used when measuring the distance property.

The marine element is a chain comprising a plurality of links, measuring the distance property corresponds to measuring a distance between links of the chain to monitor wear of the chain links, and, optionally, to monitor or measure axial bending or load in the chain. The steps of the method may be repeated to measure and monitor the distance property as a function of time.

In order that the invention may be more readily understood, reference will now be made, by way of example, to the accompanying drawings, in which:
Figure 1 is a schematic detail side view of links of a studless chain in an unworn state;
Figure 2 corresponds to Figure 1 but shows the chain in a worn state;
Figure 3 corresponds to Figure 1 but shows one of the links of the chain fitted with a sensor unit of the invention;
Figure 4 is a top view of the chain and sensor unit shown in Figure 3;
Figure 5 is a schematic block diagram of the sensor unit shown in Figures 3 and 4, also showing an ultrasonic beam emitted by an ultrasonic transducer of the unit toward an opposed link of the chain;
Figure 6 is a schematic detail side view of a variant of Figure 5 in which the opposed link is fitted with a reflector facing the transducer;
Figure 7 is a schematic view of a mooring chain fitted with sensor units of the invention, showing options for communication of data from the sensor units to a monitoring station;
Figure 8 is a timing diagram illustrating the possibility of a delay between pulse emissions of respective transducers in a sensor unit of the invention;
Figure 9 corresponds to Figure 3 but shows a stud-link chain fitted with a variant of a sensor unit of the invention;
Figure 10 is a top view of the chain and sensor unit shown in Figure 9;
Figure 11 corresponds to Figure 10 but shows another variant of a sensor unit of the invention;
Figure 12 corresponds to Figure 5 but shows a variant of the invention that detects time of arrival of a direct beam rather than a reflected beam;
Figure 13 is a schematic detail side view of a variant of the invention in which a transducer fitted to one link radiates a signal toward another link opposed across an inner opening of an intermediate link;
Figures 14a, 14b and 14c are top perspective views that show a variant of a sensor unit of the invention;
Figure 15 is a top perspective view that shows how the variant of the sensor unit in Figure 14c can be used to monitor the links of the chain in Figure 1;
Figures 16a and 16b are top perspective views that each show an example of a sensor unit of the invention that incorporates reference reflectors;
Figure 17 is a side view that shows another example of a sensor unit of the invention that incorporates a reference reflector;
Figure 18 is a top perspective view that shows a sensor unit that is used in a variant of the invention to monitor loading of the chain in Figure 1;
Figures 19a, 19b and 19c are side perspective views that each show a variant of the invention, outside the scope of the claims, where at least one transmitter-reflector pair are used to determine properties of an elongate subsea element; and
Figure 20 is a side view that shows a variant of the invention, outside the scope of the claims, in which a sensor unit is used to monitor the landing of a BOP on a subsea wellhead.

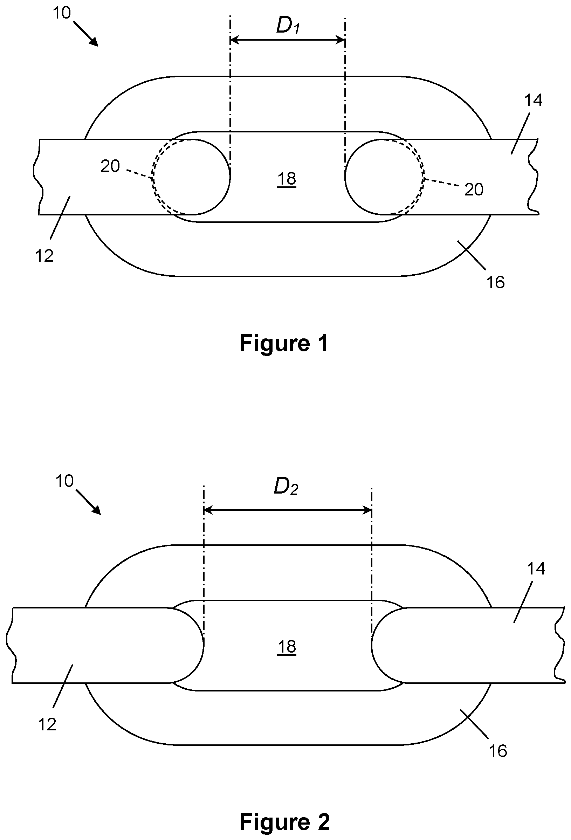

Referring firstly to Figures 1 and 2, these drawings show three successive links of a chain 10, namely outer links 12 and 14 in mutual opposition and an inner, intermediate link 16 that couples the outer links 12, 14 to each other. Thus, the outer links 12, 14 face each other end-to-end across the inner opening 18 of the intermediate link 16. The outer links 12, 14 have the same general orientation as each other, whereas the intermediate link 16 is oriented generally orthogonally to the outer links 12, 14. Otherwise, the links 12, 14, 16 are all identical to each other.

Figure 1 shows, in dotted lines, the contact interfaces 20 where the inner end surfaces of the outer links 12, 14 bear against the inner end surfaces of the intermediate link 16. It is at those interfaces 20 that wear of the chain 10 is most likely to occur.

In Figure 1, the chain 10 is shown in its initial unworn state. Consequently, the end portions of the links 12, 14, 16 all have their original full thickness. This determines an initial longitudinal distance D₁ between the opposed facing ends of the outer links 12, 14.

With wear due to friction over a period of use, metal of the links 12, 14, 16 will erode away at the contact interfaces 20. Consequently, the thickness of the end portions of the links 12, 14, 16 will reduce as shown, exaggeratedly, in Figure 2. This causes the **initial longitudinal** distance *D₁* between the outer links 12, 14 to lengthen to a new, greater distance *D₂*. Embodiments of the invention are predicated upon determining the increase between *D₁* and *D₂* and thereby inferring the degree of wear suffered by and between the links 12, 14, 16.

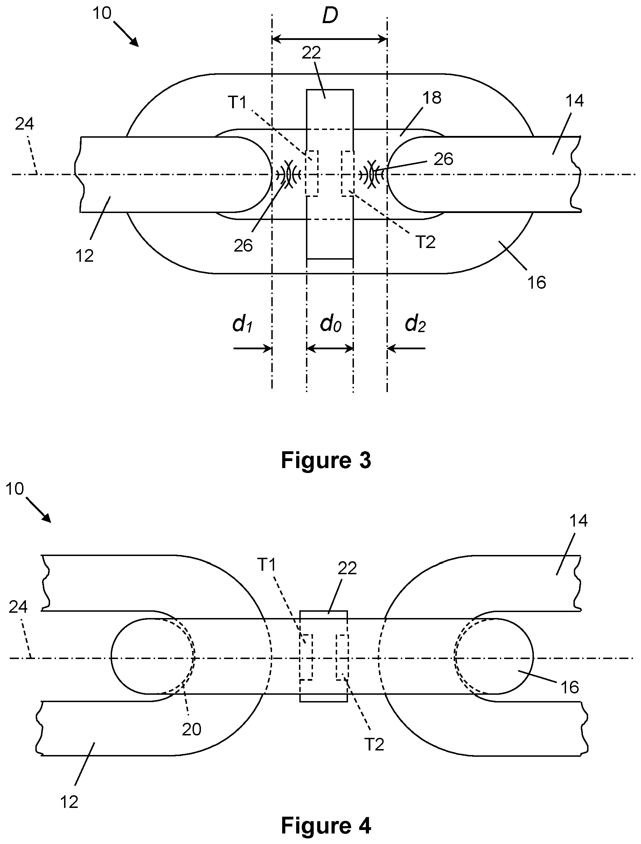

Turning next, then, to Figures 3 and 4 of the drawings, the intermediate link 16 of the chain 10 is shown fitted with or incorporating a sensor unit 22 of the invention for determining the longitudinal distance D between the opposed facing ends of the outer links 12, 14. For this purpose, the sensor unit 22 is positioned approximately mid-way along the length of the intermediate link 16. In this example, the sensor unit 22 spans the inner opening 18, extending in a direction orthogonal to the length of the chain 10 to bridge the gap between opposed sides of the intermediate link 16. In other examples, a sensor unit 22 could be cantilevered from one side of the intermediate link 16.

The sensor unit 22 comprises a pair of ultrasonic transducers T1 and T2 that are each centred on the central longitudinal axis 24 of the intermediate link 16. In this example, the transducers T1, T2 face in mutually-opposed directions aligned with or parallel to the central longitudinal axis 24. Consequently, a radiator face of transducer T1 faces toward one of the outer links 12 and a radiator face of transducer T2 faces toward the other outer link 14.

The transducers T1, T2 emit signals 26 comprising trains of ultrasonic pulses that are reflected back to the sensor unit 22 from the opposed double-curvature outer end surfaces of the respective links 12, 14 disposed within the inner opening 18 of the intermediate link 16. The transducers T1, T2 may also receive the reflected signals and therefore serve as transceivers, or the sensor unit 22 may support separate receivers disposed beside the transducers T1 and T2. The time of flight of the pulses and corresponding reflections out and back is proportional to the longitudinal distances between the sensor unit 22 and the opposed facing end of each outer link 12, 14, which in turn are indicative of wear between the links 12, 14, 16.

In Figure 3, *d₁* represents the longitudinal distance between transducer T1 and the opposed outer link 12 and *d₂* represents the longitudinal distance between transducer T2 and the opposed outer link 14. Conversely, *d₀* represents the longitudinal distance between the radiator faces of the transducers T1 and T2, which approximates to the overall thickness of the sensor unit 22. The longitudinal distance D between the opposed facing outer ends of the outer links 12, 14 equates to *d₁ + d₂ + d₀.* The dimension *d₀* is constant and known whereas *d₁* and *d₂* are variable and measured by the sensor unit 22 to determine the degree of wear of the links 12, 14, 16.

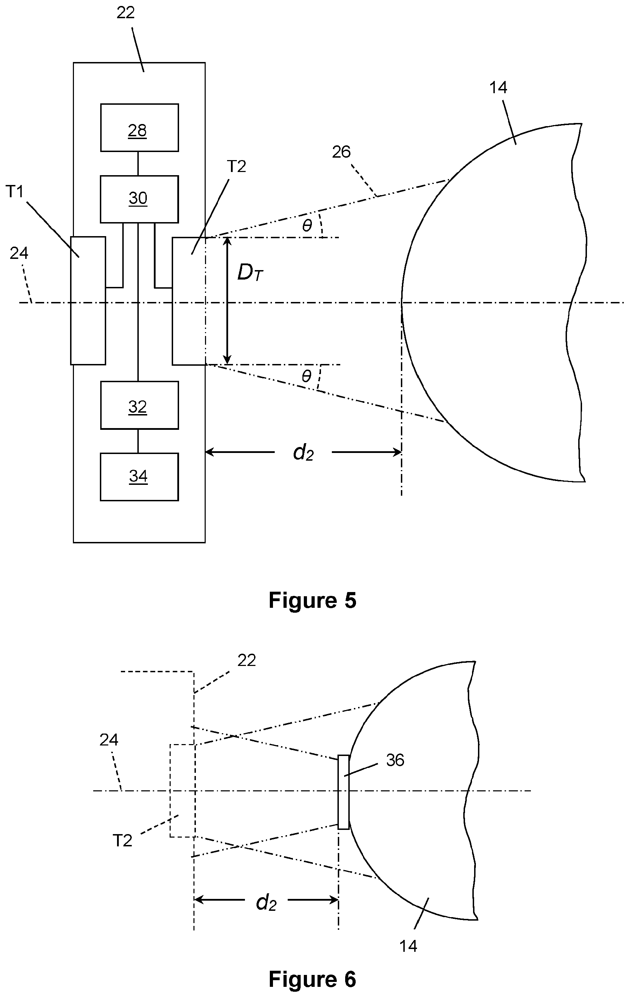

Figure 5 shows the main components of the sensor unit 22. In addition to the transducers T1 and T2, the sensor unit 22 contains a power source 28, a processor 30, a data store 32 and a communication module 34. All are sealed or encapsulated within the sensor unit 22 for water tightness.

The power source 28 could be a power input from a permanently wired or temporarily connected external source, an onboard battery, or a wireless power receiver such as an induction loop or a photocell that receives energy transiently from an external source such as a visiting ROV.

The processor 30 generates pulses to drive the transducers T1, T2, receives reflected signals via the transducers T1, T2 or via separate receivers, and processes those signals against elapsed time to determine time of flight and hence *d₁* and *d₂*, from which D can be derived. The processor 30 outputs the resulting data to the data store 32 from which the data can be transferred periodically or continuously from the sensor unit 22 to a remote monitoring station.

Data is output from the sensor unit 22 via the communication module 34, which may be configured for wired or wireless data transmission by electrical, acoustic, electromagnetic or optical means. The communication module 34 could also be configured as a relay to receive and forward data received from other sensor units 22 mounted on other links of the chain 10. Consequently, the communication module 34 could comprise an input or receiver in addition to an output or transmitter.

Figure 5 also shows some parameters of one of the transducers, namely T2, in particular DT being the diameter of the radiator face, and θ being the beam angle at which a signal 26 comprising a train of ultrasonic pulses flares away from the radiator face as a beam within a frusto-conical volume. For example, DT could be 10mm and θ could be 15° to 20° from a line parallel to the central longitudinal axis 24. The resulting beam of the signal 26 is broad enough to impinge on the double-curvature outer end surface of the opposed outer link 14, the closest point or apex of which is at distance *d₂* from the transducer T2. However, the beam of the signal 26 is not so broad as to impinge on other structures such as the sides of the intermediate link 16, which could otherwise produce false echoes.

Figure 6 shows the possibility of attaching a reflector 36 to the outer end of either or both of the outer links 12, 14 used for distance measuring in a pulse-echo arrangement, in this case the link 14 that is directly opposed to the transducer T2 along the central longitudinal axis 24. For example, the reflector 36 could be attached to the link 14 by a magnetic clamp. The reflector 36 is oriented orthogonally with respect to the central longitudinal axis 24 and therefore reduces scattering that would arise when an acoustic signal 26 comprising a beam of pulses impinges on a double-curved outer end surface of the link 14.

Corrosion and marine growth can affect the measurements of *d₁, d₂* and hence D. In particular, loss of metal due to corrosion where the ultrasound pulse signal 26 impinges on a link 12, 14, can lead to an overestimation of distance D whereas marine growth or deposition at the same location on a link 12, 14 could cause an underestimation of distance D. Advantageously, therefore, the reflector 36 could be made of a corrosion-resistant material such as a polymer to minimise effects of corrosion on the reflected signal. For similar reasons, the reflector 36 could be treated, coated or impregnated with anti-fouling compounds to resist marine growth or deposition.

A reflector 36 or similar measures could be applied to any link 12, 14 from which an acoustic signal 26 is to be reflected in a pulse-echo arrangement. For example, in principle, reflection quality could also be improved by treating, coating and/or reshaping or flattening the outer end surface of the link 14 without necessarily attaching a reflector 36 to it.

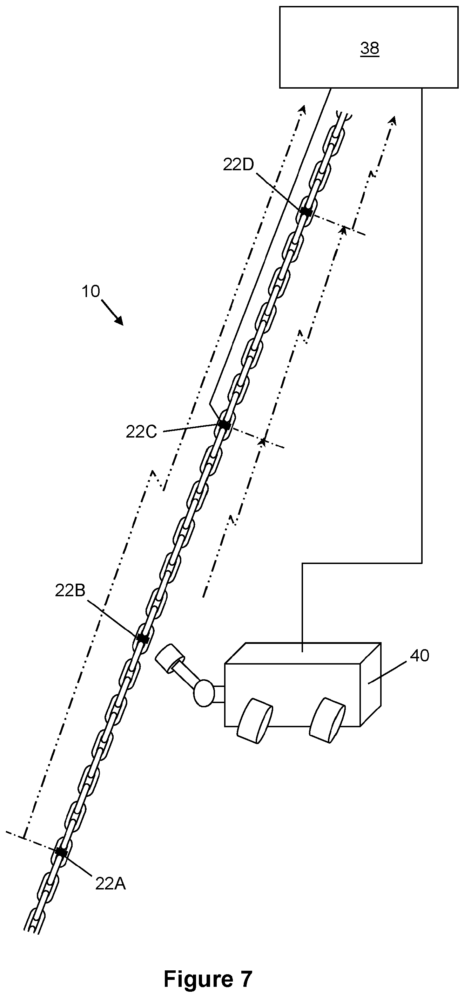

Figure 7 illustrates various options for conveying data to a monitoring station 38 from sensor units 22A to 22D mounted on a mooring chain 10.

The sensor unit 22A transmits data directly to the monitoring station 38 by wireless transmission, for example acoustically. In contrast, the sensor unit 22B transmits data to the monitoring station 38 indirectly via an ROV 40 that periodically visits and interrogates the sensor unit 22B. The ROV 40 could also, transiently, provide power to the sensor unit 22B, for example by electromagnetic induction or by illuminating a photocell of the sensor unit 22B.

The sensor unit 22C has a wired connection to the monitoring station 38 to convey data electronically or optically. Conversely, the sensor units 22C and 22D illustrate the possibility of relaying data from one sensor unit 22 through another, in this case wirelessly.

More generally, the relay function shown for sensor units 22C and 22D in Figure 7 could involve most or all of the sensor units 22 on a chain 10, providing a system in which all sensor units 22 can relay data, for example acoustically, from other sensor units 22 that are at more distal positions along the chain 10 with respect to the monitoring station 38. For example the sensor unit 22A can report to the monitoring station 38 via the sensor units 22B, 22C and 22D in sequence.

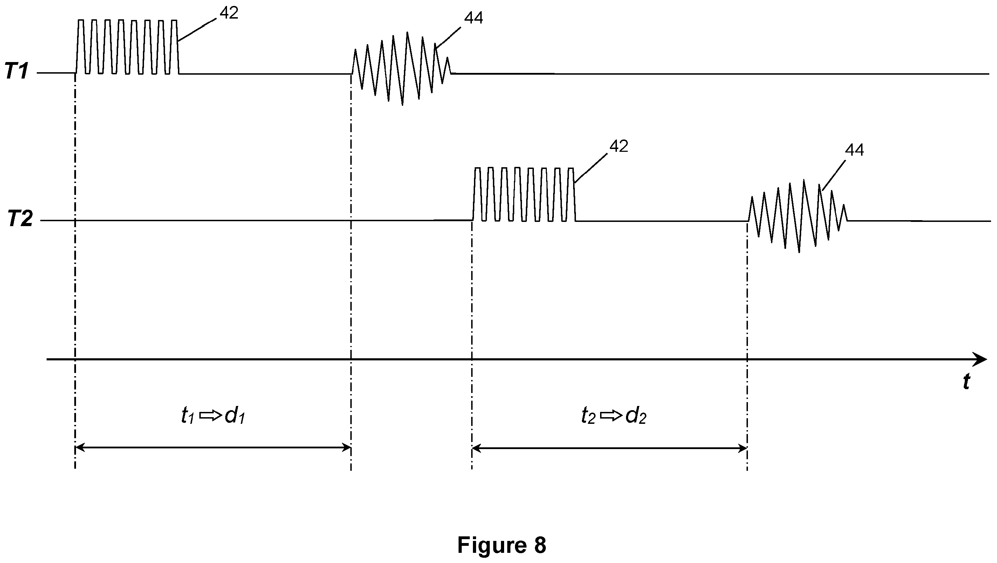

As wear of a chain 10 is a slow process, time-of-flight measurements of signals 26 from the transducers T1, T2 can be taken at widely different times. Nevertheless, measures could be taken to avoid or to mitigate interference between ultrasonic emissions from the transducers T1, T2 if quicker, simultaneous or near-simultaneous time-of-flight measurements are ever required, for example in real time when a sensor unit 22 is interrogated by a visiting ROV 40. One such measure is illustrated in the timing diagram of Figure 8, namely to delay or offset the pulse trains 42 emitted from one transducer T2 until the pulse trains 42 of the other transducer T1 have been emitted and reflected signals 44 have been received from the opposed link 12 of the chain 10. In this illustration, the out-and-back time of flight from the start of the pulse train 42 to the start of the corresponding reflected signal 44 is *t₁* for transducer T1 and *t₂* for transducer T2. Those time periods *t₁* and *t₂* imply the dimensions *d₁* and *d₂* respectively.

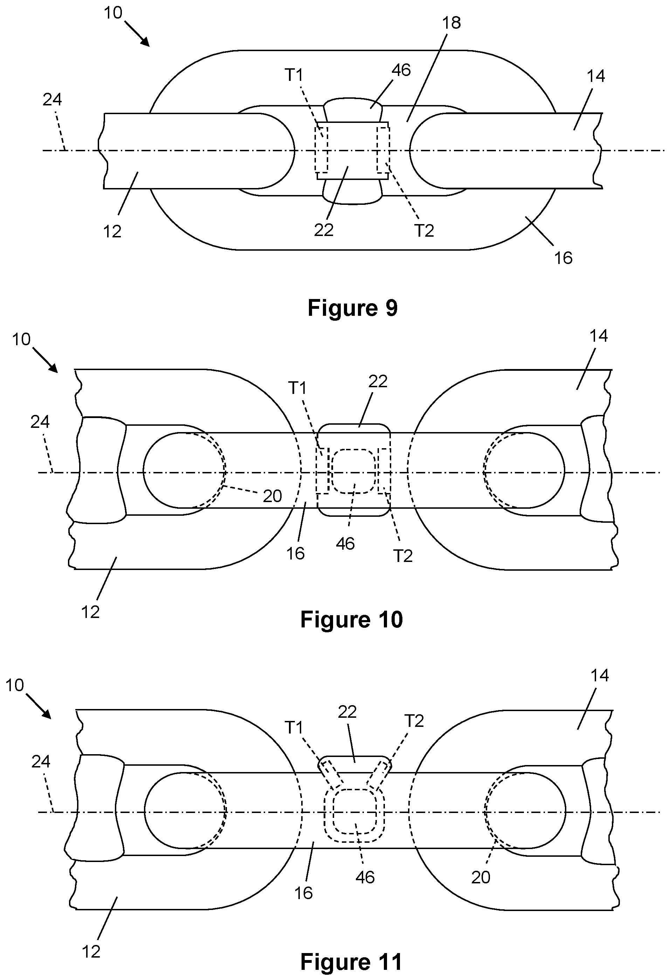

Turning next to Figures 9 to 11, these drawings show variants of the invention in which sensor units 22 are adapted for stud-link chains 10 in which a central stud 46 spans, bisects and divides the inner opening 18. In each case, the sensor unit 22 surrounds the stud 46 of the intermediate link 16 but in other examples, the sensor unit 22 could be fixed to one side of the stud 46, or indeed fixed to one or both sides of the intermediate link 16 as in the preceding embodiment.

**In** **Figures** 9 and 10, the transducers T1, T2 of the sensor unit 22 remain centred on the central longitudinal axis 24 and face in mutually-opposed directions aligned with that axis 24. Consequently, the transducers T1, T2 are disposed on mutually-opposed sides of the stud 46 of the intermediate link 16. For this purpose, the transducers T1, T2 are housed in respective limbs of the sensor unit 22 that encircles or embraces the stud 46.

In Figure 11, in contrast, the transducers T1, T2 of the sensor unit 22 are offset from the central longitudinal axis 24 to one side of the stud 46. Also, the transducers T1, T2 face in mutually-opposed directions that converge with the central longitudinal axis 24. By virtue of the inclination of the transducers T1, T2 relative to the central longitudinal axis 24, the ultrasonic beams from the transducers T1, T2 still impinge on the facing ends of the outer links 12, 14. This generates reflected signals that can be received by the transducers T1, T2 or by other receivers of the sensor unit 22 to enable calculation of *d₁, d₂* and hence D as illustrated in Figure 3. Compensation for the fixed transducer beam angles will be required.

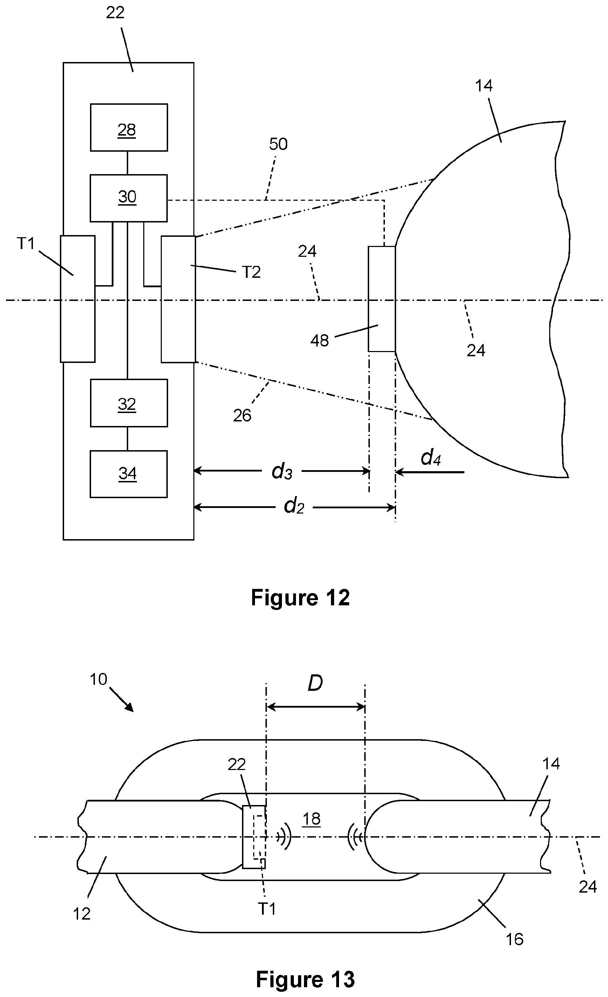

Whilst the preceding embodiments contemplate pulse-echo arrangements, Figure 12 exemplifies how the invention could instead be implemented by measuring time of flight of a signal 26 transmitted directly between an emitter such as the transducer T2 and a time-synchronised receiver 48. Thus, the signal 26 need not be reflected in the interim. In this example, the receiver 48 is fixed to the outer end of the outer link 14 opposed to the transducer T2. For example, the receiver 48 could be attached to the link 14 by a magnetic clamp.

In the example shown in Figure 12, the receiver 48 communicates with the processor 30 of the sensor unit 22 via a wired or wireless link 50. In this way, after driving the transducer T2 to emit a signal 26 comprising a train of pulses, the processor 30 measures the time of flight between emission of the pulses from the transducer T2 to reception of the pulses by the receiver 48, and thereby determines the distance *d₃* between the radiator face of the transducer T2 and the opposed face of the receiver 48. As the spacing *d₄* between the face of the receiver 48 and the underlying outer end surface of the link 14 is known, the distance *d₂* between the radiator face of the transducer T2 and the outer end surface of the link 14 can be deduced by determining *d₃*. Alternatively, wear affecting the link 14 can be inferred directly from an increase of *d₃* over time because *d₄* is constant.

The direct transmission system exemplified in Figure 12 presents some challenges compared with a pulse-echo system, for example the need to mount additional receiver transducers and potentially also additional cables and fixation clamps. However, even if more cumbersome to mount, the direct transmission system is still retrofittable to a chain. Conversely, as it does not rely on reflection, the direct transmission system may offer advantages over a pulse-echo system such as more reliable transmission of acoustic signals, and may require a less sensitive receiver. There is less susceptibility to corrosion because surface roughness of a reflective surface has no impact on the acoustic signal, and more generally there is no sensitivity to the orientation or curvature of a reflective surface. Marine growth can be managed by using anti-fouling materials in transducers serving as emitters or receivers.

In the example shown in Figure 12, the transducer T2 and the receiver 48 face each other along the central longitudinal axis 42. However, as the signal 26 is not reflected in this embodiment, there is greater design freedom. In particular, the signal 26 need not be constrained to travel only within the inner opening 18 of an intermediate link 16 so as to impinge on one of the outer links 12, 14 joined by the intermediate link 16. Instead, the signal 26 could travel longitudinally along a chain 10 on a path that is offset sufficiently from the central longitudinal axis 24 to bypass the links. Thus, the signal 26 could travel between an emitter and a time-synchronised receiver on the chain 10 that are separated longitudinally by two or more intermediate links 16. This would allow a chain monitoring system of the invention to determine average wear across a continuous group, set or series of several links of a chain 10.

Many other variations are possible within the inventive concept. For example, it would be possible to use only one ultrasonic transducer in fixed relation to a first link, that transducer facing toward an outer end surface of a second, adjoining link interengaged with the first link. This variant would only be capable of measuring the effect of wear at one contact interface between the two links but could still be usefully indicative of the condition of a chain around that location. Such a variant could be constructed by, for instance, removing transducer T2 from the sensor unit 22 of the preceding embodiments and only measuring distance *d₁* between transducer T1 and the facing end of the opposed link 12. This would detect degradation of the links 12, 16 because distance *d₁* will increase with wear at the contact interface 20 between the links 12, 16.

Similarly, as shown in Figure 13, it would be possible to mount a sensor unit 22 comprising a transducer T1 to an outer end of a first link 12 rather than to an intermediate link 16. In this arrangement, the signal 26 can be transmitted from the transducer T1 along the central longitudinal axis 14 within the inner opening 18 of the intermediate link 16 to be reflected back from the opposed outer end surface of the second link 14.

The monitoring station shown in Figure 7 could be substituted by a relay station such as a buoy. The relay station could, in turn, convey data to a remote monitoring station that could be on a vessel, on an offshore installation or on land.

Transducers used in the invention, whether emitters or receivers, could have active faces made of, treated with, coated with or impregnated with corrosion-resistant and/or anti-fouling materials or compounds. In addition to these measures and the reflector illustrated in Figure 6, the effects of corrosion and marine growth in a pulse-echo system can be mitigated if the ultrasound beam profile is wide enough to generate reflections from across a certain area of a link so that the reflected signal represents an average of echoes from many smaller spots, points or sub-areas on the link.

In contrast, if the system operated with a very narrow beam, for example impinging on an area of only about 10mm² on an outer end surface of a link, a small local groove in the steel caused by corrosion or a small formation arising from marine growth, such as a small mussel or barnacle, could cause a significant error in the measurements.

Pulse-echo embodiments of the present invention rely upon a certain reflectivity of the link surface upon which the ultrasound beam signal impinges when transmitted from a transducer. When the ultrasound beam is aimed toward an outer end surface of a link, only one small area at the apex of that double-curved surface is substantially perpendicular to the incoming wavefront and so is oriented to reflect the signal back along and around the central longitudinal axis to the transducer. In principle, all peripheral areas on the outer end surface of the link will reflect the signal back at such an angle to the central longitudinal axis that the signal will not necessarily impinge on the transducer. This is especially the case where surface roughness of the reflective surface is fine compared to the wavelength, being the so-called mirroring effect. However, if the surface roughness if coarse compared to the wavelength, each small area of the surface will reflect the incoming signal in many different directions, hence producing 'diffuse scattering'. As rust and other corrosion will result in a rough surface, diffuse scattering may be obtained by selecting an appropriate ultrasound frequency. In combination with a relatively wide beam, this may be beneficial to reduce inaccuracy arising from corrosion.

Other measures could be taken to avoid or to mitigate interference between ultrasonic emissions from the transducers and the corresponding reflected signals. For example, ultrasonic signals could be emitted from the transducers with different phases or with different frequencies to assist in discriminating between their reflected signals. Filtering performed in the processor of a sensor unit, or downstream in a monitoring station, can further mitigate such interference as may arise between the reflected signals of the transducers.

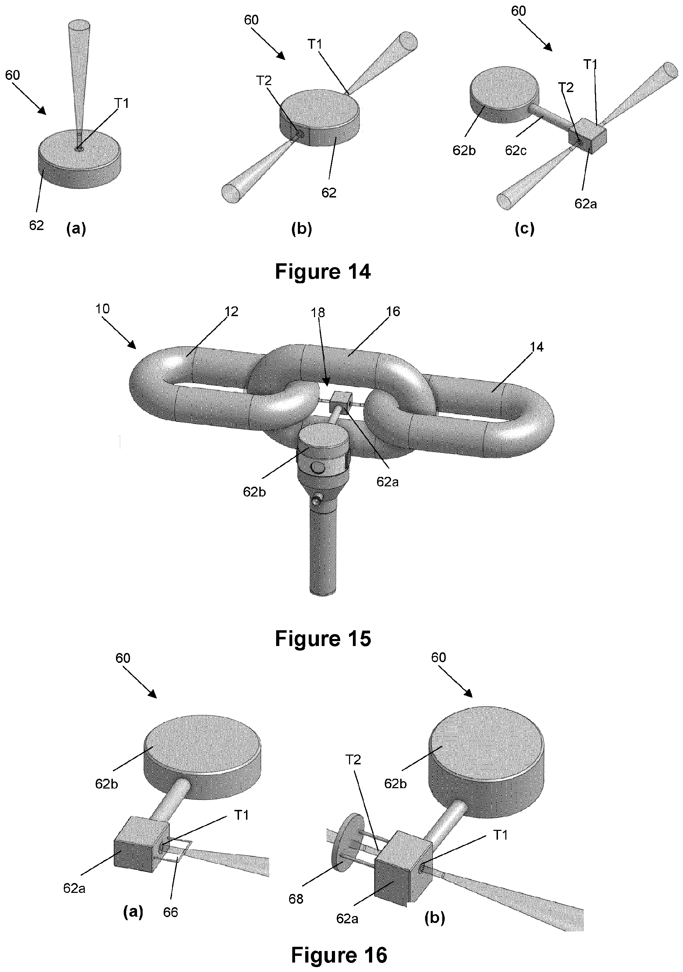

Figure 14 shows various exemplary implementations that have been envisaged for a sensor unit 60 comprising components corresponding to those of the sensor unit 22 illustrated in Figure 5. Although not shown in detail, the same main components are present in both sensor units - namely, at least one transducer (T1 and/or T2); and key electronic components such as a power source, a processor, a data store and a communication module. Those electronic components can be implemented in the form of a PCBA. As with the sensor unit 22 shown in Figure 5, all components are sealed or encapsulated within the sensor unit 60 for water tightness. Subsequent references to the sensor unit 60 should therefore be considered applicable to the previously described sensor unit 22.

In Figure 14(a), the sensor unit 60 comprises a housing 62 and a single transducer T1 or T2. All the components of the sensor unit 60 are sealed within the housing 62. Conversely, in Figure 14(b), two transducers T1 and T2 are provided within the housing 62, oriented in antiparallel configuration relative to one another or in mutual opposition about the housing, with their signal beams emitted in mutually-opposed directions.

It is also envisaged that the sensor unit 60 could comprise two or more sensor (housing) modules or sub-units, with the components of the sensor unit being split or distributed between these modules. In this respect, Figure 14(c) shows a specific example in which a first module 62a contains the transducers T1 and T2 and a second module 62b contains the remaining electronic components. An arm 62c extending between the two modules 62a, 62b connects them together and contains electrical and communication connections between the transducers T1, T2 and the remainder of the electronic components. This arrangement - whereby the transducers are offset or separated from the other electronic components - beneficially enables the size of the first module 62a containing the transducers to be reduced. As a result, the transducers T1, T2 can be used to measure distances in smaller spaces than would be the case if using a sensor unit that comprises only a single larger housing 62.

Figure 15 illustrates this benefit in the specific context of using the sensor unit 60 for monitoring links 12, 14 of a chain 10. The module 62a containing the pair of transducers T1, T2 can be inserted into the inner opening 18 of the intermediate link 16, while the module 62b containing the rest of the electronic components remains adjacent to the chain 10, offset laterally from the longitudinal axis of the chain 10.

As noted previously, in their most general sense, pulse-echo embodiments of the present invention estimate distance to a target by calculating the distance travelled in water D_{W} by the signal pulses emitted from and received by the sensor unit 22, 60. This calculation involves multiplying the velocity of sound in water C_{W} by the time of flight in water T_{W} of the signal pulses to and from the target.

The time of flight measured for any given signal will correspond to the time of flight though the thin transducer protection layer (typically made of PEEK or polyether ether ketone), through the water column to the target, and back along the same beam path. The time of flight takes into account the total time of flight through both the protection layer and the water T_{PW}, but the time of flight through the protection layer T_{P} is non-negligible and would need to be compensated for in subsequent distance calculations by the processor in the sensor unit 60. This is done via the following formulae: ${D}_{W} = {C}_{W} / 2 * \left({T}_{PW}-2*{D}_{P}/{C}_{P}\right) ,$

Where C_{P} is the velocity of sound in the protection layer and D_{P} is the thickness of the protection layer. This can also be expressed as: ${D}_{W} = GAIN * {T}_{PW} + OFFSET ,$ where C_{W} / 2 = *GAIN* and - (C_{W} / C_{P} * D_{P}) = *OFFSET.*

The velocity of sound in the protection layer C_{P} and the thickness of the protection layer D_{P} will be known with quite high accuracy during the manufacturing process of the sensor. This means that the *OFFSET* value will be known and can be programmed into the processor of the sensor unit 22, 60. Small tolerance variations in both D_{P} and C_{P} would be expected, particularly (in the case of C_{P}) with changes in temperature. These changes could affect the *OFFSET* value, but can be compensated and calibrated for, e.g., via temperature measurements of temperature in the sensor unit 22, 60.

A particularly key parameter in the formula used to calculate D_{W} is the velocity of sound in water C_{W}. However, this parameter varies depending on temperature, salinity, and depth of the water. Of these variables, depth and salinity are unlikely to change significantly for any given sensor unit implemented in a semi-permanent location, e.g., for monitoring the wear of marine mooring chains. However, if a sensor unit is implemented at one time in a freshwater environment, and at a different time in a seawater environment, then the salinity changes in this instance would need to be accounted for once the sensor unit is moved. Also, the sensitivity of C_{W} to temperature is small but not negligible: during an offshore campaign, the water temperature may change by several degrees. This needs to be accounted for to avoid possible measurement errors.

It is possible to measure the salinity and temperature of the water around the sensor unit 60, and then to estimate the effects on C_{W} using known textbook formulae. Alternatively, in the invention, it is envisaged that the changes in C_{W} resulting from changes in salinity and temperature could be directly compensated for through calibration of the sensor unit 60 via the use of a reference measurement. To obtain the reference measurement, a reference target is placed at a known (or constant) distance D_{Ref} from the sensor unit 60 and a pulse from a transducer T1 or T2 in the sensor unit 60 is directed at the reference target to obtain a reference signal that is indicative of the time of flight T_{Ref} between the transducer and the reference target. The (reference) velocity of sound in water C_{W, Ref} can then be derived from the reference signal using the formula: ${C}_{W , Ref} = 2 * \left({D}_{Ref}/{T}_{Ref}\right)$

The velocity of sound in water C_{W,Ref} derived in this way can be used to calibrate the processor in the sensor unit 60: the derived value C_{W,Ref} is input to the corresponding formula when determining the distance to the main target (e.g., in the above-described embodiments, the link of the chain 10).

The reference target may take one of several different forms. In its simplest form, the reference target may correspond to a receiver positioned at a known or constant distance from the emitter (which may correspond to an acoustic transducer such as those shown and described above). The reference signal in this instance would correspond to the signal that was emitted by the emitter.

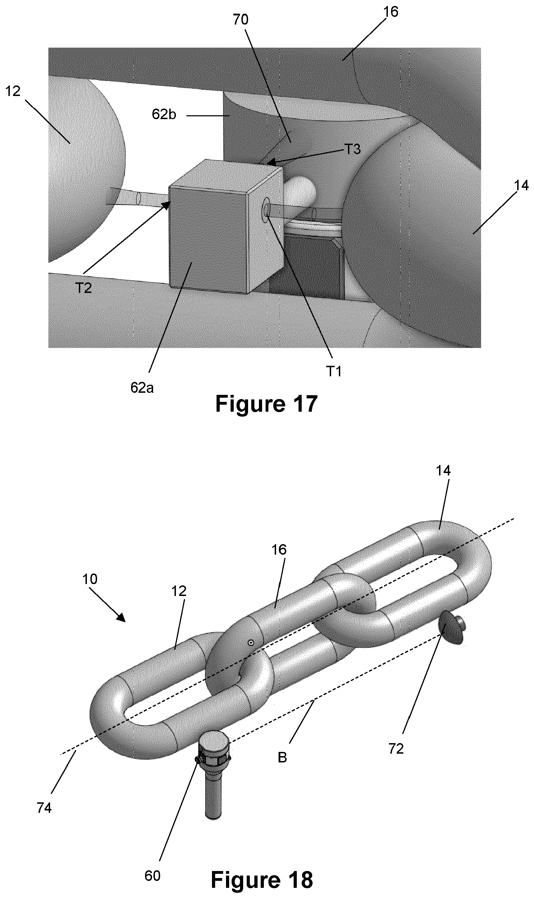

Alternatively, and as exemplified by the arrangements shown in Figures 16 and 17, the reference target may take the form of one or more reference reflectors: a component that is made of reflective materials, and which is placed in the path of the signal beam that is emitted by an emitter (in the illustrated arrangements, one of the transducers T1 or T2). The reference reflectors will reflect at least some of the emitted signal that is incident upon them; the reflected signal is returned to the receiver (in the illustrated arrangements, also the transducers T1 or T2) to form the reference signal. The reference reflectors that are used may be arranged in different ways.

In one configuration, the reference reflector is positioned in the path of the main beam - namely, the signal beam that is directed towards the main target (e.g., in the above-described embodiments, the link of the chain 10) to obtain the desired distance measurement output. The reference reflector in this case therefore may be also referred to as a 'main beam reference reflector'. In this configuration, the reference reflector would be arranged such that it reflects only a portion of the incident signal back to the transducer as a reference 'echo' signal (this can also be referred to as 'partial reflection'). The remainder of the incident signal that is not reflected by the reference reflector is able to reach to main target.

Main beam reference reflectors should be large or wide enough to generate a detectable reference echo from the main beam that is also directed towards the main target, but narrow enough that the signal reflected from the main target remains useful. Thus, the same transducer can be used to measure both the reference distance and the target distance. This is beneficial as it enables the reference measurement to be obtained without requiring any additional electronics, circuitry or any additional transducers to be implemented. All that is required is some extra programming instructions for the processor to separate the two signals.

As such, the main beam reference reflector make take the form of a relatively small or narrow structure that is inserted into the 'main beam' - the beam path of the signal emitted by the transducer(s) T1, T2 towards the main target. For example, the thin wire 66 that is shown in the single-transducer implementation of Figure 16a. Alternatively, a narrow disk (not shown) could be suspended in the beam path. A variation of this implementation could involve extending the outer casing of the module 62a containing the transducer T1 to also encompass the reference reflector, thereby avoiding potential deformation or displacement of the reference reflector during operations.

In another configuration, the reference reflector is positioned in the path of an 'auxiliary beam' - namely, a signal beam that is emitted by an emitter of the sensor unit but is not directed towards the main target. The reference reflector in this case therefore may be also referred to as an 'auxiliary beam reference reflector'. In this configuration, the reference reflector can reflect at least a portion of the incident signal back to the transducer as a reference 'echo' signal, but typically will reflect the majority or substantially all of the incident signal back to the transducer as the reference signal (this latter scenario can also be referred to as 'total reflection').

In the arrangements using an auxiliary beam reference reflector, at least two transducers will be used. One 'reference' or 'auxiliary' transducer will provide the primary function of determining the reference velocity of sound in the water C_{W,Ref} (using the formula set out previously) by emitting an 'auxiliary' or 'reference' beam towards the reference reflector, and receiving a reference 'echo' signal. The other 'main' transducer(s) will emit the 'main' beam towards the main target to measure the distance to the main target. As a greater proportion of the emitted signal directed towards the main target is returned to the transducer in these arrangements, a robust measurement of the distance to the main target can be obtained.

The auxiliary beam reference reflectors can take various forms, as illustrated in Figures 16b and 17. In the two-transducer implementation of Figure 16b, one transducer T1 corresponds to the main transducer and emits a main beam signal towards the main target. The other transducer T2 corresponds to the auxiliary transducer, and emits an auxiliary beam signal towards the reference reflector which is positioned at a known or constant position relative to the sensor unit 60. In this case, the reference reflector takes the form of a reflecting plate 68. In the illustrated example of Figure 16b, the reflecting plate 68 is arranged such that a portion of the auxiliary beam can pass through the plate (e.g., through a hole in its centre); the reference signal in this specific example therefore only corresponds to a partial reflection of the incident signal. This means that the auxiliary beam can also serve as a 'secondary' main beam - it can be directed towards another 'main' target further away and be used to calculate another 'main' distance measurement. Alternatively, it is envisaged that the reference reflector can reflect substantially all the auxiliary beam signal to form the reference signal.

In the example of Figure 17, three transducers T1, T2, T3 are used. One transducer T3 emits the auxiliary or reference beam towards a reference reflector and hence corresponds to the auxiliary transducer. The other two transducers T1, T2 emit main beams towards two different main targets and hence correspond to the main transducers. This configuration is particularly beneficial when monitoring wear of chains (as in the above-described embodiments), since it allows the distance to two different links 12, 14 of the chain to be measured using the main transducers T1, T2. In this arrangement, the auxiliary beam emitted by the auxiliary transducer T3 is emitted towards the second sensor module 62b containing the electronic components, and a portion 70 of the housing of this sensor module 62b serves as the reference reflector. Whilst it is possible to use a separate reference reflector such as that shown in Figure 16b instead, the use of a portion 70 of the housing of the module 62b as the reference reflector makes use of existing components, thereby minimising the number of components that need to be used. Additionally, the distance between the two modules is known or predefined (and can be substantially fixed) since it is defined by the length of the arm 62c.

In cases where an auxiliary beam reference reflector is used, and reflection of substantially the entire beam incident on the reference target occurs, use of a spherically concave reflector can be particularly beneficial. The beam emitted by the transducers will propagate through the water as a spherically expanding pressure wave. Where a spherically concave reference reflector (having a radius of curvature equal to the distance to the transducer) is used, the entire wavefront will hit a receiving surface of the reference reflector simultaneously, and contribution from all points of the reflector surface will return to the transducer in phase. This will maximise the reflected signal strength and minimise the duration of the echo, thereby achieving a sharp and distinct echo. An improved, stronger signal is thereby obtained.

Other properties of the reference reflector - such as acoustic impedance and surface roughness - are also factors to consider when selecting an appropriate reference reflector. A reflector made of a material having an acoustic impedance significantly different from water will result in a strong reflection. Similarly, a reflector having surface irregularities will achieve a diffuse reflection, thereby reflecting increased energy back to the transducer. Some particularly suitable materials for use as reference reflectors could therefore include thin metal wires (e.g., made of stainless steel or other corrosion-resistant materials) that are of a few millimetres in diameter, or small highly polished concave disks that are equal to or smaller than the width of the ultrasound beam emitted by the transducers.

It will be appreciated that the general calibration system and method described above would also be applicable over a broad range of implementation scenarios where reflections of ultrasound beam pulses are used to measure distances, and where it would be beneficial to account for changes in the velocity of sound in water.

As noted above, the calibration method would be useful when measuring distances to or between chain links to monitor wear of mooring chain links. It is also envisaged that the calibration method could be used when measuring distances to or between marine chain links for other purposes. One such example involves measuring distances to or between chain links to monitor axial strain of mooring chains, and thus indirectly to monitor the load in the mooring chains.

In this respect, Figure 18 illustrates one possible implementation scenario in which a sensor unit 60 comprising at least one ultrasound transducer (not shown) is clamped onto or next to or is otherwise associated with one link 12 of a chain 10. A reflector 72 is similarly associated with another link 14 of the chain 10, such that an uninterrupted beam path B exists between the sensor unit 60 and the reflector 72. This beam path B lies parallel to and laterally offset from a central longitudinal axis 74 running through the chain 10. The reflector 72 reflects the acoustic signal beam emitted by the transducer. The time of flight of the pulses in the acoustic signal beam to and from the transducer is proportional to the longitudinal distance between the transducer and the reflector 72.

Although not shown, a reference reflector 66, 68, 70 corresponding to any of the examples described above may be incorporated into or used with the sensor unit 60 substantially as set out in any of the examples described above. The reference reflector 66, 68, 70 may be used to obtain a measurement of the velocity of sound in the surrounding water, and this value can be used to calibrate the processor of the sensor unit 60 during, or prior to, measurement of the distance between the sensor unit 60 and the reflector 72.

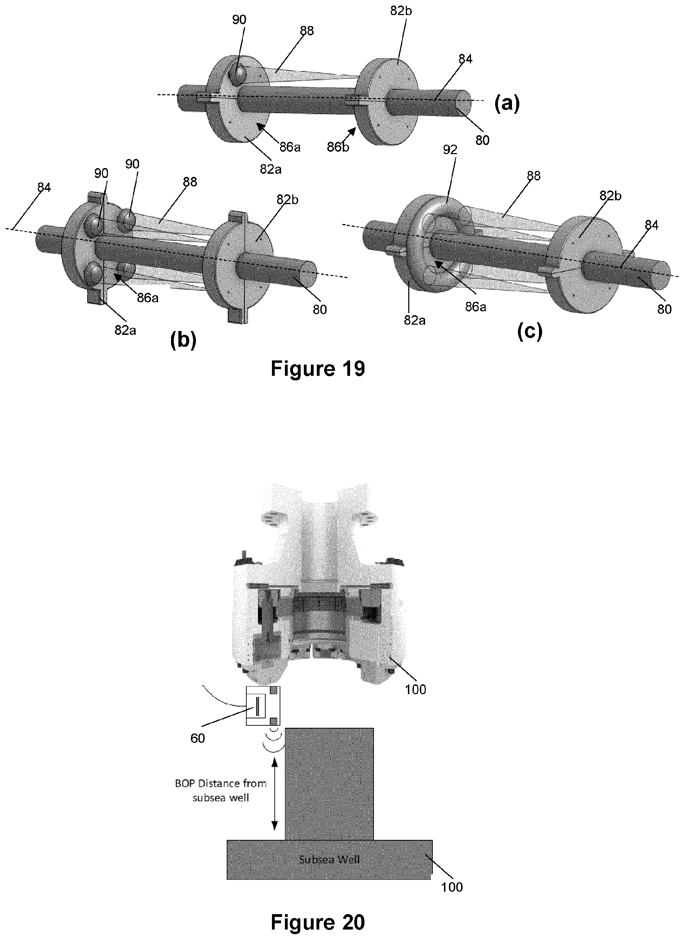

Outside the scope of the claims, figure 19 illustrates another possible use case for the calibration method described above, where properties of an elongate subsea element 80 that change over time are derived using pulse-echo distance measurement methods. The elongate element 80 may take the form of a relatively rigid element such as a structural member of a rig, or a riser or pipe for conveying hydrocarbons; or a relatively flexible element such as a mooring rope, a cable or an umbilical.

A pair of clamps 82a, 82b are attached to the elongate element 80 at respective positions spaced apart from each other along the central longitudinal axis 84 of the elongate element 80. The elongate element 80 is represented schematically as being of substantially circular cross-section, hence being substantially cylindrical when straight. In these embodiments, one clamp 82a, shown here to the left, is a reflector clamp and the other clamp 82b, shown to the right, is an emitter/receiver clamp. The clamps have axially inward faces 86a, 86b in mutual opposition. On its inward face 86b, the emitter/receiver clamp 82b supports one or more signal emitters being ultrasonic transducers that direct one or more beams of acoustic signals 88 toward at least one reflector 90, 92 mounted on the opposed inward face 86a of the reflector clamp 82a, as shown in each of Figures 19a, 19b and 19c. As above, the time of flight of the pulses in the acoustic signal beam travelling to and from the transducer(s) is proportional to the longitudinal distance between the transducer(s) and the reflectors 90, 92.

As shown in Figure 19a, if only a single discrete transducer-reflector pair is utilised, a simple one-dimensional distance measurement can be obtained. This is suitable for measuring elongation of the elongate element 80 over time. In this instance, an additional reference reflector 66, 68, 70 may be incorporated for calibration measurement purposes. This can take the form of a main beam reference reflector - such as the thin wire 66 shown in Figure 16a, inserted in the main beam path of the signal emitted from the transducer towards the main target (the reflector 90). This arrangement would allow the beam emitted from the single transducer to also be used for calibration purposes. Alternatively, an additional 'auxiliary' transducer may be incorporated onto the emitter/receiver clamp 82b, and an auxiliary beam reference reflector may be utilised for calibration. This auxiliary beam reference reflector may correspond to the plate 68 shown in Figure 16b or a portion 70 of the housing of the sensor module 62a. Alternatively, a portion of the reflector clamp 82a may be used as the reference reflector if the material in question is appropriately reflective.

As shown in Figure 19b, it is envisaged that multiple discrete transducer-reflector pairs can be used. As noted in relation to Figure 19a, an additional reference reflector 66, 68, 70 may be incorporated for calibration measurement purposes. Where all the transducers are used to obtain the main distance measurements, the reference reflector can take the form of a main beam reference reflector - such as the thin wire 66 shown in Figure 16a, inserted in the main beam path of the signal emitted from one of the transducers towards the main target (the corresponding reflector 90). Alternatively, one of the transducers may be used as an auxiliary transducer and an auxiliary beam reference reflector may be incorporated for calibration purposes. This auxiliary beam reference reflector may correspond to the plate 68 shown in Figure 16b or a portion 70 of the sensor unit housing 62a. The remaining transducers would still be used to emit signals towards the main target and obtain distance measurements to the main target. Ideally, at least three transducer-reflector pairs would be used to provide an accurate main distance measurement.

The use of multiple transducer-reflector pairs to derive the main distance measurements means that changes in elongation along additional dimensions (not just along the central longitudinal axis of the elongate element) can be detected. This provides an indication of other properties of the elongate element. For example, if the distance measurement obtained at any given time by each of the transducer-reflector pairs is the same (to within measurement error), this is an indication that the elongate element has been subject to a pure axial load (i.e., with no or minimal bending). If the distance measurement obtained by each of the transducer-reflector pairs is significantly different, but the average measurement for all sensors remains constant, this is an indication that the elongate element has been subject to a pure bending load. If the distance measurement obtained by each of the transducer-reflector pairs, as well as the average measurement for all pairs, is significantly different, this is an indication that the elongate element has been subject to a combined bending and axial load.

In some instances, it is envisaged that one transducer-reflector pair could be used for calibration purposes - i.e., one of the 'main' reflectors could instead be repurposed as a reference reflector - while the remaining transducer-reflector pairs can be used to calculate the main distance measurements.

Outside the scope of the claims, an alternative configuration for measuring axial and bending load on an elongate element 80 is shown in Figure 19c. A single, substantially continuous reflector 92 is provided on the reflector clamp 82a, for example in the form of a ring, torus, or doughnut-shaped reflector. This continuous reflector 92 would still enable multiple echoes to be obtained, one for each transducer that is used, but would avoid the need for the more precise alignment that would apply when using discrete paired transducers and reflectors. Moreover, regardless of the degree of bending / twisting of the elongate element 80, the emitted pulse beam would still be reflected by the reflector 92. Furthermore, the continuous reflector implementation obviates the need to correct for any other properties of the reflector when processing the main distance measurements.

As noted in relation to Figure 19b, an additional reference reflector 66, 68, 70 may be incorporated for calibration measurement purposes. This reference reflector may take the form of a main beam reference reflector if all the transducers are being used for 'main' target distance measurements. Alternatively, if one of the transducers is being used primarily for calibration purposes, the reference reflector may take the form of an auxiliary beam reference reflector. Alternatively, a portion of the continuous reflector 92 itself may be repurposed as a reference reflector.

It is further envisaged that the calibration methods described above could be suitable for distance measurements in other use cases. For example, as illustrated in Figure 20, these methods may be used when landing a BOP (blowout preventer) 100 on a subsea wellhead 102. In this case, the sensor unit 60 may be inserted between the two components 100, 102, as illustrated in the diagram. Alternatively, sub-components of the sensor unit 60 may be mounted on each of the BOP 100 and the subsea wellhead 102: for example, the emitter(s) or transducer(s) can be mounted to the BOP 100 and the receiver(s) or reflector(s) can be mounted to the subsea wellhead 102; or vice versa. In this instance, one or more reference reflectors 66, 68, 70 may be attached to whichever of the BOP 100 or the subsea wellhead 102 the transducer is mounted to and calibration may be achieved via any of the methods set out above.

Alternatively (and not shown), the sensor unit 60 may be used to monitor cyclic expansion of a subsea wellhead itself (i.e., between sub-structures of the subsea wellhead). In this instance, the emitter or transducer would be attached to one of the sub-structures (e.g., via a magnetic clamp or other suitable attachment means), and the receiver(s) or reflector(s) can be mounted to another sub-structure; or vice versa. In this instance, one or more reference reflectors 66, 68, 70 may be attached to whichever sub-structure the transducer is mounted to and calibration may be achieved via any of the methods set out above.

## Claims

1. A system for monitoring the condition of a mooring chain (10), the system comprising:
at least one acoustic emitter configured to be fixed to a first link of the mooring chain (10), the at least one acoustic emitter being configured to emit an acoustic signal (26);
at least one acoustic receiver configured to be fixed to any link of the mooring chain, the at least one acoustic receiver being configured to receive the acoustic signal (26); and
a processor (30) configured to measure a time lapse between emitting and receiving the acoustic signal (26) to determine a distance between the at least one acoustic emitter and a link of the mooring chain (10) other than the first link.

2. The system of Claim 1, wherein the at least one acoustic emitter and the at least one acoustic receiver are configured to be fixed to the first link of the mooring chain (10).

3. The system of Claim 2, wherein an acoustic transducer (T1, T2) serves as the at least one acoustic emitter and as the at least one acoustic receiver.

4. The system of Claim 2 or Claim 3, wherein the at least one acoustic emitter and the at least one acoustic receiver are each configured to be opposed to an intermediate reflecting surface on a second link of the mooring chain (10).

5. The system of Claim 4, wherein:
(a) the at least one acoustic emitter is configured to emit the acoustic signal (26) toward an opposed reflecting outer end surface of the second link of the mooring chain (10), that surface of the second link being disposed within an inner opening of the first link; or
(b) the at least one acoustic emitter is configured to emit the acoustic signal (26) toward an opposed reflecting outer end surface of the second link of the mooring chain (10), that surface of the second link being disposed within an inner opening of an intermediate link that couples the first link to the second link, and optionally wherein the at least one acoustic emitter is also arranged to be disposed within the inner opening of the intermediate link when in use.

6. The system of any preceding claim, wherein the at least one acoustic emitter and the at least one acoustic receiver are implemented together in a sensor unit (22) that is attachable to the first link of the mooring chain (10), and optionally wherein the sensor unit (22) is configured to span the inner opening of the first link from one longitudinally-extending side to another.

7. The system of Claim 1, wherein the at least one acoustic receiver is configured to be fixed to a second link of the mooring chain (10).

8. The system of Claim 7, wherein: (a) the at least one acoustic receiver is configured to be disposed within an inner opening of the first link, or (b) the at least one acoustic receiver is configured to be disposed within an inner opening of an intermediate link coupling the first link to the second link, or (c) the at least one acoustic receiver and the at least one acoustic emitter are configured to be disposed within the inner opening of the intermediate link.

9. The system of Claim 7 or Claim 8, wherein the processor (30) is in data communication with the at least one acoustic emitter and the at least one acoustic receiver via a connection that extends between the first and second links.

10. The system of any preceding claim, wherein the at least one acoustic emitter is attachable when in use to the first link at a central longitudinal position, and optionally wherein the at least one acoustic emitter is attachable to at least one longitudinally-extending side of the first link.

11. The system of any preceding claim, wherein the at least one acoustic emitter is configured to be aligned with a central longitudinal axis (24) of the first link and optionally wherein the at least one acoustic emitter is orientable to emit the acoustic signal (26) in a direction substantially parallel to the central longitudinal axis (24) of the first link.

12. The system of any preceding claim, wherein the at least one acoustic emitter is configured to be disposed within an inner opening of the first link.

13. The system of any of Claims 1 to 10, wherein the at least one acoustic emitter is configured to be offset laterally from a plane of the first link, and optionally wherein the at least one acoustic emitter is orientable to emit the acoustic signal (26) in a direction converging with the central longitudinal axis of the first link

14. The system of any preceding claim, comprising first and second acoustic emitters configured to be in mutually-opposed orientation, and optionally wherein the first and second acoustic emitters are configured to be fixed to the first link being an intermediate link disposed between and conjoining a pair of outer links each with a reflecting outer end surface that is opposed to a respective one of the acoustic emitters and is configured to be disposed within an inner opening of the first link.

15. The system of any preceding claim, wherein at least the first link is a stud link that comprises a stud dividing an inner opening, and optionally wherein the or each acoustic emitter is configured to be mounted on the stud.

16. The system of any preceding claim, wherein the or each acoustic emitter is configured to be disposed on an outer end surface of the first link.

17. The system of any preceding claim, further comprising a processor configured to determine time of flight of the acoustic signal from the or each acoustic emitter to the at least one acoustic receiver and to generate distance data accordingly, and optionally further comprising a data store (32) for storing the distance data and/or a communication module (34) for conveying the distance data to a monitoring or relay station.

18. A method for monitoring the condition of a mooring chain (10), the method comprising:
emitting an acoustic signal (26) from an emission location fixed to a first link of the mooring chain (10);
receiving the acoustic signal (26) at a receiving location fixed to any link of the mooring chain (10); and
measuring a time lapse between emitting and receiving the acoustic signal (26) to determine a distance between the emission location and a link of the mooring chain (10) other than the first link.

19. The method of Claim 18, comprising reflecting the acoustic signal (26) to the receiving location from a second link of the mooring chain (10).

20. The method of Claim 19, comprising any one of: (a) reflecting the acoustic signal (26) from a location within an inner opening of the first link; (b) reflecting the acoustic signal (26) from a location within an inner opening of an intermediate link that couples the first link to the second link; or (c) emitting and reflecting the acoustic signal (26) from a location within an inner opening of an intermediate link that couples the first link to the second link.

21. The method of Claim 18, wherein the receiving location is fixed relative to a second link of the mooring chain (10).

22. The method of Claim 21, comprising: (a) receiving the acoustic signal (26) within an inner opening of the first link; or (b) receiving the acoustic signal (26) within an inner opening of an intermediate link coupling the first link to the second link; or (c) emitting and receiving the acoustic signal (26) within the inner opening of the intermediate link.

23. The method of any of Claims 18 to 22, comprising emitting the acoustic signal (26) along a central longitudinal axis (24) of the first link; or emitting the acoustic signal (26) in a direction converging with the central longitudinal axis (24) of the first link.

24. The method of any of Claims 18 to 23, comprising emitting the acoustic signal (26) from within an inner opening of the first link, or emitting the acoustic signal (26) from an outer end surface of the first link.

25. The method of any of Claims 18 to 24, comprising emitting acoustic signals (26) in mutually opposed directions from first and second emission locations fixed relative to the first link, and optionally emitting the acoustic signals (26) at different times, with different phases or with different frequencies..

26. The method of any of Claims 18 to 25, comprising generating data representative of said distance at the first link and communicating that distance data from the first link to a receiving station remote from that first link, and optionally further comprising (a) relaying the distance data along the mooring chain (10) to the receiving station or (b) conveying the distance data to the receiving station via an underwater vehicle stationed beside the first link.

## Patentansprüche

1. System zum Überwachen des Zustands einer Verankerungskette (10), wobei das System Folgendes umfasst:
mindestens einen Schallgeber, der dazu konfiguriert ist, an einem ersten Glied der Verankerungskette (10) befestigt zu werden, wobei der mindestens eine Schallgeber dazu konfiguriert ist, ein Schallsignal (26) auszugeben;
mindestens einen Schallempfänger, der dazu konfiguriert ist, an einem beliebigen Glied der Verankerungskette befestigt zu sein, wobei der mindestens eine Schallempfänger dazu konfiguriert ist, das Schallsignal (26) zu empfangen; und
einen Prozessor (30), der dazu konfiguriert ist, eine Zeitspanne zwischen dem Ausgeben und Empfangen des Schallsignals (26) zu messen, um eine Entfernung zwischen dem mindestens einen Schallgeber und einem anderen Glied der Verankerungskette (10) als dem ersten Glied zu bestimmen.

2. System nach Anspruch 1, wobei der mindestens eine Schallgeber und der mindestens eine Schallempfänger dazu konfiguriert sind, an dem ersten Glied der Verankerungskette (10) befestigt zu sein.

3. System nach Anspruch 2, wobei ein Schallwandler (T1, T2) als der mindestens eine Schallgeber und der mindestens eine Schallempfänger dient.

4. System nach Anspruch 2 oder Anspruch 3, wobei der mindestens eine Schallgeber und der mindestens eine Schallempfänger jeweils dazu konfiguriert sind, einer dazwischenliegenden reflektierenden Oberfläche an einem zweiten Glied der Verankerungskette (10) gegenüberzuliegen.

5. System nach Anspruch 4, wobei:
(a) der mindestens eine Schallgeber dazu konfiguriert ist, das Schallsignal (26) in Richtung einer gegenüberliegenden reflektierenden äußeren Endoberfläche des zweiten Glieds der Verankerungskette (10) auszugeben, wobei diese Oberfläche des zweiten Glieds innerhalb einer inneren Öffnung des ersten Glieds angeordnet ist; oder
(b) der mindestens eine Schallgeber dazu konfiguriert ist, das Schallsignal (26) in Richtung einer gegenüberliegenden reflektierenden Endoberfläche des zweiten Glieds der Verankerungskette (10) auszugeben, wobei diese Oberfläche des zweiten Glieds innerhalb einer inneren Öffnung eines Zwischenglieds angeordnet ist, das das erste Glied an das zweite Glied koppelt, und wobei optional der mindestens eine Schallgeber außerdem dazu eingerichtet ist, wenn im Gebrauch, innerhalb der inneren Öffnung des Zwischenglieds angeordnet zu sein.

6. System nach einem der vorangehenden Ansprüche, wobei der mindestens eine Schallgeber und der mindestens eine Schallempfänger zusammen in einer Sensoreinheit (22) implementiert sind, die an dem ersten Glied der Verankerungskette (10) angebracht werden kann, und wobei optional die Sensoreinheit (22) dazu konfiguriert ist, die innere Öffnung des ersten Glieds von einer sich längs erstreckenden Seite zu einer anderen zu überbrücken.

7. System nach Anspruch 1, wobei der mindestens eine Schallempfänger dazu konfiguriert ist, an einem zweiten Glied der Verankerungskette (10) befestigt zu sein.

8. System nach Anspruch 7, wobei: (a) der mindestens eine Schallempfänger dazu konfiguriert ist, innerhalb einer inneren Öffnung des ersten Glieds angeordnet zu sein, oder (b) der mindestens eine Schallempfänger dazu konfiguriert ist, innerhalb einer inneren Öffnung eines das erste Glied an das zweite Glied koppelnden Zwischenglieds angeordnet zu sein, oder (c) der mindestens eine Schallempfänger und der mindestens eine Schallgeber dazu konfiguriert sind, innerhalb der inneren Öffnung des Zwischenglieds angeordnet zu sein.

9. System nach Anspruch 7 oder Anspruch 8, wobei der Prozessor (30) mit dem mindestens einen Schallgeber und dem mindestens einen Schallempfänger über eine Verbindung, die sich zwischen dem ersten und dem zweiten Glied erstreckt, in Datenkommunikation steht.

10. System nach einem der vorangehenden Ansprüche, wobei der mindestens eine Schallgeber, wenn er in Gebrauch ist, an einer mittigen Längsposition an dem ersten Glied angebracht werden kann und wobei optional der mindestens eine Schallgeber an mindestens einer sich längs erstreckenden Seite des ersten Glieds angebracht werden kann.

11. System nach einem der vorangehenden Ansprüche, wobei der mindestens eine Schallgeber dazu konfiguriert ist, mit einer Längsmittelachse (24) des ersten Glieds auf einer Linie zu liegen, und wobei optional der mindestens eine Schallgeber orientiert werden kann, um das Schallsignal (26) in einer im Wesentlichen zu der Längsmittelachse (24) des ersten Glieds parallelen Richtung auszugeben.

12. System nach einem der vorangehenden Ansprüche, wobei der mindestens eine Schallgeber dazu konfiguriert ist, innerhalb einer inneren Öffnung des ersten Glieds angeordnet zu sein.

13. System nach einem der Ansprüche 1 bis 10, wobei der mindestens eine Schallgeber dazu konfiguriert ist, von einer Ebene des ersten Glieds seitlich versetzt zu sein, und wobei optional der mindestens eine Schallgeber orientiert werden kann, um das Schallsignal (26) in einer mit der Längsmittelachse des ersten Glieds konvergierenden Richtung auszugeben.

14. System nach einem der vorangehenden Ansprüche, umfassend einen ersten und einen zweiten Schallgeber, die dazu konfiguriert sind, sich in einander gegenüberliegender Orientierung zu befinden, und wobei optional der erste und der zweite Schallgeber dazu konfiguriert sind, an dem ersten Glied befestigt zu sein, das ein Zwischenglied ist, das zwischen einem Paar äußerer Glieder angeordnet ist und diese miteinander verbindet, die jeweils eine reflektierende äußere Endoberfläche aufweisen, die einem jeweiligen der Schallgeber gegenüberliegt und dazu konfiguriert ist, innerhalb einer inneren Öffnung des ersten Glieds angeordnet zu sein.

15. System nach einem der vorangehenden Ansprüche, wobei mindestens das erste Glied ein Stegglied ist, das einen eine innere Öffnung teilenden Steg umfasst, und wobei optional der oder jeder Schallgeber dazu konfiguriert ist, an dem Steg montiert zu sein.

16. System nach einem der vorangehenden Ansprüche, wobei der oder jeder Schallgeber dazu konfiguriert ist, auf einer äußeren Endoberfläche des ersten Glieds angeordnet zu sein.

17. System nach einem der vorangehenden Ansprüche, ferner umfassend einen Prozessor, der dazu konfiguriert ist, die Laufzeit des Schallsignals von dem oder jedem Schallgeber zu dem mindestens einen Schallempfänger zu bestimmen und dementsprechend Entfernungsdaten zu erzeugen, und optional ferner umfassend einen Datenspeicher (32) zum Speichern der Entfernungsdaten und/oder ein Kommunikationsmodul (34) zum Liefern der Entfernungsdaten an eine Überwachungs- oder Relaisstation.

18. Verfahren zum Überwachen des Zustands einer Verankerungskette (10), wobei das Verfahren Folgendes umfasst:
Ausgeben eines Schallsignals (26) von einem an einem ersten Glied der Verankerungskette (10) befestigten Ausgabeort aus;
Empfangen des Schallsignals (26) an einem an einem beliebigen Glied der Verankerungskette (10) befestigten Empfangsort; und
Messen einer Zeitspanne zwischen dem Ausgeben und dem Empfangen des Schallsignals (26), um eine Entfernung zwischen dem Ausgabeort und einem anderen Glied der Verankerungskette (10) als dem ersten Glied zu bestimmen.

19. Verfahren nach Anspruch 18, umfassend das Reflektieren des Schallsignals (26) an den Empfangsort von einem zweiten Glied der Verankerungskette (10) aus.

20. Verfahren nach Anspruch 19, umfassend eines der Folgenden: (a) Reflektieren des Schallsignals (26) von einem Ort innerhalb einer inneren Öffnung des ersten Glieds; (b) Reflektieren des Schallsignals (26) von einem Ort innerhalb einer inneren Öffnung eines Zwischenglieds, das das erste Glied an das zweite Glied koppelt; oder (c) Ausgeben und Reflektieren des Schallsignals (26) von einem Ort innerhalb einer inneren Öffnung eines Zwischenglieds, das das erste Glied an das zweite Glied koppelt.

21. Verfahren nach Anspruch 18, wobei der Empfangsort relativ zu einem zweiten Glied der Verankerungskette (10) feststehend ist.

22. Verfahren nach Anspruch 21, umfassend: (a) Empfangen des Schallsignals (26) innerhalb einer inneren Öffnung des ersten Glieds; oder (b) Empfangen des Schallsignals (26) innerhalb einer inneren Öffnung eines das erste Glied an das zweite Glied koppelnden Zwischenglieds; oder (c) Ausgeben und Empfangen des Schallsignals (26) innerhalb der inneren Öffnung des Zwischenglieds.

23. Verfahren nach einem der Ansprüche 18 bis 22, umfassend das Ausgeben des Schallsignals (26) entlang einer Längsmittelachse (24) des ersten Glieds; oder Ausgeben des Schallsignals (26) in einer mit der Längsmittelachse (24) des ersten Glieds konvergierenden Richtung.

24. Verfahren nach einem der Ansprüche 18 bis 23, umfassend das Ausgeben des Schallsignals (26) von innerhalb einer inneren Öffnung des ersten Glieds aus oder Ausgeben des Schallsignals (26) von einer äußeren Endoberfläche des ersten Glieds aus.

25. Verfahren nach einem der Ansprüche 18 bis 24, umfassend das Ausgeben von Schallsignalen (26) in einander entgegengesetzten Richtungen von einem ersten und einem zweiten Ausgabeort, die relativ zu dem ersten Glied feststehend sind, und optional Ausgeben der Schallsignale (26) zu unterschiedlichen Zeiten, mit unterschiedlichen Phasen oder mit unterschiedlichen Frequenzen.

26. Verfahren nach einem der Ansprüche 18 bis 25, umfassend das Erzeugen von die Entfernung repräsentierenden Daten an dem ersten Glied und Übermitteln dieser Entfernungsdaten von dem ersten Glied aus an eine von diesem ersten Glied entfernte Empfangsstation und optional ferner umfassend (a) Weiterleiten der Entfernungsdaten entlang der Verankerungskette (10) an die Empfangsstation oder (b) Liefern der Empfangsdaten an die Empfangsstation über ein neben dem ersten Glied stationiertes Unterwasserfahrzeug.

## Revendications

1. Système de contrôle de l'état d'une chaîne de mouillage (10), le système comprenant :
au moins un émetteur acoustique conçu pour être fixé à une première maille de la chaîne de mouillage (10), l'au moins un émetteur acoustique étant conçu pour émettre un signal acoustique (26) ;
au moins un récepteur acoustique conçu pour être fixé à une maille quelconque de la chaîne de mouillage, l'au moins un récepteur acoustique étant conçu pour recevoir le signal acoustique (26) ; et
un processeur (30) conçu pour mesurer un intervalle de temps entre l'émission et la réception du signal acoustique (26) afin de déterminer une distance entre l'au moins un émetteur acoustique et une maille de la chaîne de mouillage (10) autre que la première maille.

2. Système selon la revendication 1, dans lequel l'au moins un émetteur acoustique et l'au moins un récepteur acoustique sont conçus pour être fixés à la première maille de la chaîne de mouillage (10).

3. Système selon la revendication 2, dans lequel un transducteur acoustique (T1, T2) remplit la fonction de l'au moins un émetteur acoustique et de l'au moins un récepteur acoustique.

4. Système selon la revendication 2 ou la revendication 3, dans lequel l'au moins un émetteur acoustique et l'au moins un récepteur acoustique sont conçus chacun pour être placés en regard d'une surface réfléchissante intermédiaire sur une deuxième maille de la chaîne de mouillage (10).

5. Système selon la revendication 4, dans lequel :
(a) l'au moins un émetteur acoustique est conçu pour émettre le signal acoustique (26) en direction d'une surface d'extrémité extérieure réfléchissante, placée en regard, de la deuxième maille de la chaîne de mouillage (10), cette surface de la deuxième maille étant disposée à l'intérieur d'une ouverture intérieure de la première maille ; ou
(b) l'au moins un émetteur acoustique est conçu pour émettre le signal acoustique (26) en direction d'une surface d'extrémité extérieure réfléchissante, placée en regard, de la deuxième maille de la chaîne de mouillage (10), cette surface de la deuxième maille étant disposée à l'intérieur d'une ouverture intérieure d'une maille intermédiaire qui accouple la première maille à la deuxième maille, et dans lequel, éventuellement, l'au moins un émetteur acoustique est également conçu pour être disposé à l'intérieur de l'ouverture intérieure de la maille intermédiaire durant l'utilisation.

6. Système selon l'une quelconque des revendications précédentes, dans lequel l'au moins un émetteur acoustique et l'au moins un récepteur acoustique sont mis en œuvre ensemble dans une unité de capteur (22) qui est propre à être attachée à la première maille de la chaîne de mouillage (10), et dans lequel, éventuellement, l'unité de capteur (22) est conçue pour s'étendre dans l'ouverture intérieure de la première maille d'un côté s'étendant longitudinalement à un autre.

7. Système selon la revendication 1, dans lequel l'au moins un récepteur acoustique est conçu pour être fixé à une deuxième maille de la chaîne de mouillage (10).

8. Système selon la revendication 7, dans lequel : (a) l'au moins un récepteur acoustique est conçu pour être disposé à l'intérieur d'une ouverture intérieure de la première maille, ou (b) l'au moins un récepteur acoustique est conçu pour être disposé à l'intérieur d'une ouverture intérieure d'une maille intermédiaire qui accouple la première maille à la deuxième maille, ou (c) l'au moins un récepteur acoustique et l'au moins un émetteur acoustique sont conçus pour être disposés à l'intérieur de l'ouverture intérieure de la maille intermédiaire.

9. Système selon la revendication 7 ou la revendication 8, dans lequel le processeur (30) est en communication de données avec l'au moins un émetteur acoustique et l'au moins un récepteur acoustique par le biais d'une liaison qui s'étend entre les première et deuxième mailles.

10. Système selon l'une quelconque des revendications précédentes, dans lequel l'au moins un émetteur acoustique est propre à être attaché, durant l'utilisation, à la première maille au niveau d'un emplacement longitudinal central, et dans lequel, éventuellement, l'au moins un émetteur acoustique est propre à être attaché à au moins un côté s'étendant longitudinalement de la première maille.

11. Système selon l'une quelconque des revendications précédentes, dans lequel l'au moins un émetteur acoustique est conçu pour être aligné avec un axe longitudinal central (24) de la première maille et dans lequel, éventuellement, l'au moins un émetteur acoustique est propre à être orienté pour émettre le signal acoustique (26) dans une direction sensiblement parallèle à l'axe longitudinal central (24) de la première maille.

12. Système selon l'une quelconque des revendications précédentes, dans lequel l'au moins un émetteur acoustique est conçu pour être disposé à l'intérieur d'une ouverture intérieure de la première maille.

13. Système selon l'une quelconque des revendications 1 à 10, dans lequel l'au moins un émetteur acoustique est conçu pour être décalé latéralement d'un plan de la première maille, et dans lequel, éventuellement, l'au moins un émetteur acoustique est propre à être orienté pour émettre le signal acoustique (26) dans une direction convergeant avec l'axe longitudinal central de la première maille.

14. Système selon l'une quelconque des revendications précédentes, comprenant des premier et second émetteurs acoustiques conçus pour être placés de façon à être orientés à l'opposé l'un de l'autre, et dans lequel, éventuellement, les premier et second émetteurs acoustiques sont conçus pour être fixés à la première maille qui est une maille intermédiaire disposée entre et unissant une paire de mailles extérieures comportant chacune une surface d'extrémité extérieure réfléchissante qui est placée en regard d'un émetteur respectif parmi les émetteurs acoustiques et est conçue pour être disposée à l'intérieur d'une ouverture intérieure de la première maille.

15. Système selon l'une quelconque des revendications précédentes, dans lequel au moins la première maille est une maille à étai qui comprend un étai divisant une ouverture intérieure, et dans lequel, éventuellement, l'émetteur acoustique ou chacun des émetteurs acoustiques est conçu pour être adapté sur l'étai.

16. Système selon l'une quelconque des revendications précédentes, dans lequel l'émetteur acoustique ou chacun des émetteurs acoustiques est conçu pour être disposé sur une surface d'extrémité extérieure de la première maille.

17. Système selon l'une quelconque des revendications précédentes, comprenant, en outre, un processeur conçu pour déterminer un temps de vol du signal acoustique de l'émetteur acoustique ou de chacun des émetteurs acoustiques à l'au moins un récepteur acoustique et pour générer en conséquence des données de distance, et comprenant, en outre, éventuellement, un magasin de données (32) destiné à stocker les données de distance et/ou un module de communication (34) destiné à transmettre les données de distance à une station de contrôle ou de retransmission.

18. Procédé de contrôle de l'état d'une chaîne de mouillage (10), le procédé comprenant :
émettre un signal acoustique (26) depuis un emplacement d'émission fixé à une première maille de la chaîne de mouillage (10) ;
recevoir le signal acoustique (26) au niveau d'un emplacement de réception fixé à une maille quelconque de la chaîne de mouillage (10) ; et
mesurer un intervalle de temps entre l'émission et la réception du signal acoustique (26) afin de déterminer une distance entre l'emplacement d'émission et une maille de la chaîne de mouillage (10) autre que la première maille.

19. Procédé selon la revendication 18, comprenant la réflexion du signal acoustique (26) vers l'emplacement de réception depuis une deuxième maille de la chaîne de mouillage (10).

20. Procédé selon la revendication 19, comprenant l'une quelconque des opérations suivantes : (a) réflexion du signal acoustique (26) depuis un emplacement à l'intérieur d'une ouverture intérieure de la première maille ; (b) réflexion du signal acoustique (26) depuis un emplacement à l'intérieur d'une ouverture intérieure d'une maille intermédiaire qui accouple la première maille à la deuxième maille ; ou (c) émission et réflexion du signal acoustique (26) depuis un emplacement à l'intérieur d'une ouverture intérieure d'une maille intermédiaire qui accouple la première maille à la deuxième maille.

21. Procédé selon la revendication 18, dans lequel l'emplacement de réception est fixe relativement à une deuxième maille de la chaîne de mouillage (10).

22. Procédé selon la revendication 21, comprenant : (a) la réception du signal acoustique (26) à l'intérieur d'une ouverture intérieure de la première maille ; ou (b) la réception du signal acoustique (26) à l'intérieur d'une ouverture intérieure d'une maille intermédiaire accouplant la première maille à la deuxième maille ; ou (c) l'émission et la réception du signal acoustique (26) à l'intérieur de l'ouverture intérieure de la maille intermédiaire.

23. Procédé selon l'une quelconque des revendications 18 à 22, comprenant l'émission du signal acoustique (26) le long d'un axe longitudinal central (24) de la première maille ; ou l'émission du signal acoustique (26) dans une direction convergeant avec l'axe longitudinal central (24) de la première maille.

24. Procédé selon l'une quelconque des revendications 18 à 23, comprenant l'émission du signal acoustique (26) depuis l'intérieur d'une ouverture intérieure de la première maille, ou l'émission du signal acoustique (26) depuis une surface d'extrémité extérieure de la première maille.

25. Procédé selon l'une quelconque des revendications 18 à 24, comprenant l'émission de signaux acoustiques (26) dans des directions mutuellement opposées depuis des premier et second emplacements d'émission fixes relativement à la première maille et, éventuellement, l'émission des signaux acoustiques (26) à différents moments, avec différentes phases ou avec différentes fréquences.

26. Procédé selon l'une quelconque des revendications 18 à 25, comprenant la génération de données représentant ladite distance au niveau de la première maille et la transmission de ces données de distance de la première maille à une station de réception située à distance de cette première maille, et comprenant, en outre, éventuellement, (a) la retransmission des données de distance le long de la chaîne de mouillage (10) à la station de réception ou (b) la transmission des données de distance à la station de réception par le biais d'un véhicule sous-marin placé près de la première maille.
